# FASCICULE DE BREVET EUROPEEN

(11) **EP 3 535 182 B1**
(45) Date de publication et mention de la délivrance du brevet: **16.08.2023**
(21) Numéro de dépôt: 17797131.4
(22) Date de dépôt: 07.11.2017
(51) Int. Cl.: B63B 34/15

(54) **DISPOSITIF ET SYSTÈME DE PROPULSION D'UN PASSAGER**
ANTRIEBSSYSTEM UND VORRICHTUNG FÜR EINEN FAHRGAST
PROPULSION SYSTEM AND DEVICE FOR A PASSENGER

(30) Priorité: 07.11.2016 US 201662418750 P; 06.06.2017 FR 1755013
(43) Date de publication de la demande: 11.09.2019
(73) Titulaire: Zipair, 13220 Chateauneuf-les-Martigues (FR)
(72) Inventeur: ZAPATA, Frankie, 13740 Le Rove (FR)
(74) Mandataire: Med'inVent Consulting
(86) Numéro de dépôt international: PCT/EP2017/078514
(87) Numéro de publication internationale: WO 2018/083354

(56) Documents cités:
- WO-A1-2010/039952
- WO-A1-2015/132478
- WO-A1-2016/130022
- WO-A1-2016/130022
- US-A1- 2010 030 411
- US-A1- 2014 103 165
- US-A1- 2014 216 319
- US-A1- 2015 028 161

## Description

L'invention concerne un dispositif et un système de propulsion d'un passager pour que ce dernier puisse se mouvoir dans les airs et/ou à la surface d'un fluide, avec de très grandes libertés de mouvements indépendamment de son agilité naturelle et son physique.

L'invention prévoit ainsi que le système soit très simple à mettre en œuvre et accessible au plus grand nombre.

Aujourd'hui, les sports nautiques sont très appréciés grâce à leur côté ludique et aux sensations qu'ils procurent. Des dispositifs de propulsion divers ont été conçus pour permettre à des personnes de se déplacer à la surface de l'eau, voire sous ladite surface.

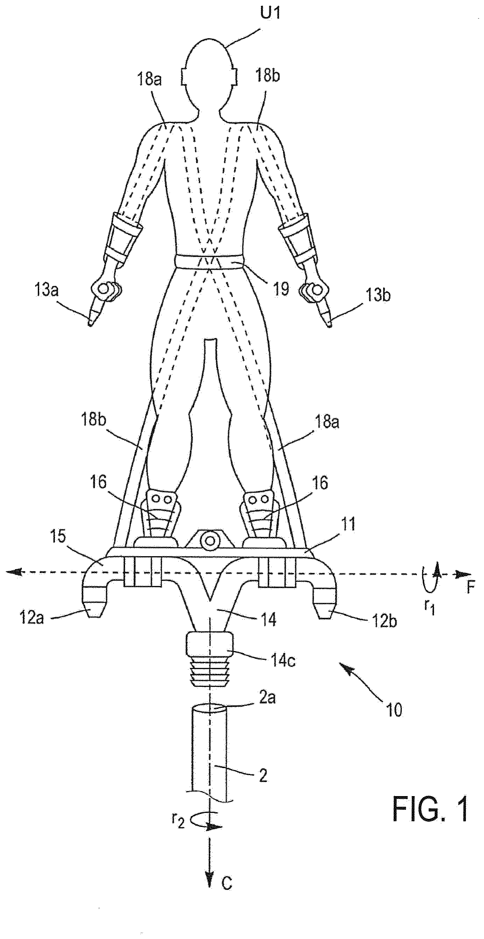

La figure 1 présente un premier mode de réalisation d'un dispositif de propulsion 10, tel que décrit dans les documents US 8,336,805 ou 8,608,104. Un tel dispositif permet à son utilisateur d'effectuer des figures inégalées à ce jour. Pour cela, ledit utilisateur exploite son physique pour provoquer des trajectoires multiples, telles que des loopings par exemple. Il peut même simuler l'évolution d'un dauphin, décrivant ainsi une trajectoire sinusoïdale en étant alternativement immergé et émergé, à l'instar dudit mammifère aquatique. Ce dispositif de propulsion 10 comporte un corps principal sous la forme d'une plateforme 11 sur laquelle un passager U1 peut prendre place. Le dispositif de propulsion, décrit en liaison avec la figure 1, comporte un groupe de poussée coopérant avec ladite plateforme 11, consistant en une paire de tuyères principales 12a et 12b fixées contre la face inférieure de la plateforme 11. Selon la figure 1, le groupe de poussée d'un tel dispositif peut comporter en outre deux tuyères secondaires 13a et 13b pour faciliter sa maniabilité. Celles-ci sont libres et destinées à être éventuellement et respectivement tenues par un passager U1 au niveau des avant-bras ou des mains. Pour délivrer une force de poussée suffisante et permettre un envol puis un déplacement, le dispositif de propulsion 10 comporte des moyens 14 pour collecter et distribuer un fluide sous pression, par exemple de l'eau, aux tuyères principales, voire aux tuyères secondaires si elles existent. Un tel fluide est préférentiellement acheminé au moyen d'un conduit d'alimentation souple 2 depuis une station de compression distante, non représentée sur la figure 1. Un tel conduit d'alimentation peut être réalisé à partir d'une manche à incendie ou de tous autres moyens et/ou matériels présentant la résistance nécessaire à la pression exercée par le fluide pressurisé. Les moyens 14 pour collecter et distribuer un fluide sous pression, que nous nommerons par mesure de simplification « collecteur », peuvent ainsi présenter une base 14c à laquelle est connecté un embout 2a d'un conduit d'alimentation 2, par exemple au moyen d'une cannelure adaptée pour recevoir ledit conduit 2. Selon la figure 1, le collecteur 14 peut présenter une forme proche d'un « Y » pour collecter depuis la base 14c et distribuer via des bras le fluide sous pression aux tuyères principales 12a et 12b. Le collecteur 14 est connecté aux tuyères principales par l'intermédiaire d'un coude éventuel 15 afin d'orienter lesdites tuyères principales selon un axe sensiblement perpendiculaire à la face inférieure de la plateforme 11. Les bras sont connectés auxdites tuyères principales selon une liaison pivot. Un tel agencement permet une libre rotation r1 suivant un axe F sensiblement parallèle auxdits bras, module la butée que représente la face inférieure 11b de la plateforme 11 lors d'une inclinaison excessive de cette dernière. Une telle liaison pivot permet à l'utilisateur de « décoller » aisément de la surface de l'eau et lui confère une grande capacité d'orientation et de mouvement. L'embout 2a du conduit d'alimentation 2 peut avantageusement coopérer avec le collecteur 14 au niveau de sa base 14c selon une liaison pivot également, pour permettre une libre rotation r2 autour d'un axe C sensiblement parallèle au conduit 2. Le dispositif peut ainsi librement pivoter autour dudit axe C sans engendrer de boucles ou de contraintes excessives sur le conduit d'alimentation 2.

Pour distribuer le fluide sous pression aux tuyères secondaires 13a et 13b, à titre d'exemple et comme l'indique la figure 1, des conduits secondaires 18a et 18b, sous la forme avantageuse de tuyaux souples, peuvent être prévus pour délivrer, depuis le collecteur 14, ledit fluide sous pression aux tuyères secondaires. Pour ne pas gêner le passager U1, lesdits conduits secondaires peuvent être guidés le long du dos jusqu'aux épaules dudit passager U1 par l'utilisation de moyens de maintien 19, tels que des sangles, des harnais, etc. Ledit passager U1 peut en outre utiliser des moyens pour contraindre les tuyères secondaires au niveau de ses avant-bras.

La plateforme 11 peut présenter des moyens de maintien d'un passager sur sa face supérieure. Ainsi, selon la position préférée d'un passager sur la plateforme 11, lesdits moyens de maintien peuvent consister, comme l'indique la figure 1, en une paire de chaussons, de sangles de pied, également connues sous l'appellation anglo-saxonne « *Foot Straps* », ou de bottes de fixation 16 d'un type similaire à ce que l'on peut trouver, par exemple, dans la pratique du *wakeboard.*

Un tel dispositif de propulsion 10 peut être alimenté par toute station de compression de fluide distante à partir du moment où celle-ci est apte à délivrer un fluide dont la pression est suffisante pour assurer le fonctionnement du dispositif de propulsion 10. Une telle station de compression peut consister en un véhicule nautique à moteur (ci-après désigné « VNM ») adapté, tel que décrit notamment dans le document WO2013/041787A1.

Bien que le dispositif de propulsion 10 décrit en liaison avec la figure 1 permette de se mouvoir facilement dans et/ou à la surface de l'eau et offre à son utilisateur U1 de très grands degrés de liberté pour réaliser de nombreuses figures acrobatiques, il peut présenter, pour certains utilisateurs, quelques inconvénients. Tout d'abord, la configuration des tuyères en-dessous de la plateforme 11 privilégie un mouvement sensiblement vertical et ne permet pas un déplacement rapide et sensiblement parallèle à la surface de l'eau : la vitesse de déplacement est ainsi limitée, restreignant les sensations d'un passager en quête de performances. De plus, lorsqu'un tel passager U1 souhaite se déplacer le long de la surface de l'eau, il doit fournir un effort non négligeable pour incliner la plateforme, puisque la configuration des tuyères en-dessous de la plateforme entraîne naturellement un mouvement vertical. De ce fait, la position d'équilibre pour parvenir au déplacement souhaité est souvent difficile à conserver et devient très vite fatigante pour le passager. Enfin, bien que les sensations procurées soient fabuleuses, elles requièrent un apprentissage minimal et quelque fois très ingrat, voire rédhibitoire, pour le débutant, avant que celui-ci puisse goûter aux joies et sensations évoquées précédemment. Un tel dispositif de propulsion 10 peut être considéré pour certains comme peu adapté à un loisir de découverte offrant un accès au plaisir immédiat, y compris à des personnes peu à l'aise en milieu aquatique.

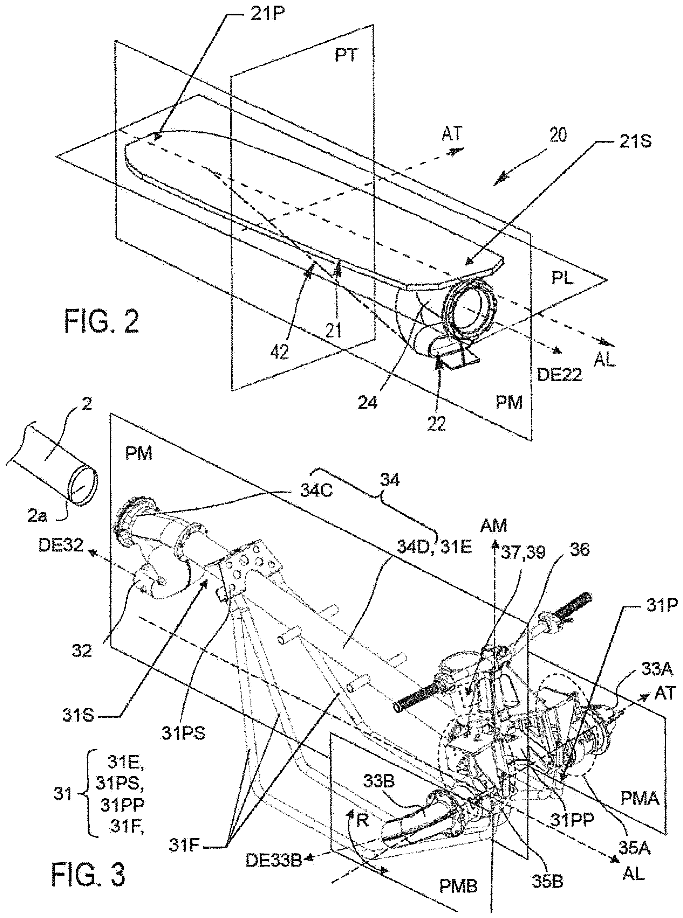

Pour augmenter la vitesse de déplacements horizontaux, diminuer les contraintes de fatigue du passager, un deuxième dispositif de propulsion a été conçu. Il est notamment décrit dans le document WO 2015/132478 A1. Comme l'indique la figure 2, un tel dispositif de propulsion 20 est notamment agencé pour limiter, voire supprimer, toutes contraintes liées à la pratique d'un sport nautique très proche du surf, un tel sport devenant, contrairement à son ainé, praticable sur tout plan d'eau quelle que soit la météorologie locale. Un tel dispositif de propulsion 20 comporte une plateforme 21 sur laquelle prend place un passager, non représenté sur la figure 2. Ladite plateforme 21 coopère avec des moyens 24 pour collecter et distribuer un fluide pressurisé à une tuyère principale 22, cette dernière expulsant ledit fluide depuis une sortie de fluide selon une direction donnée DE22, lesdits moyens 24 étant alimentés en fluide pressurisé par un conduit d'alimentation en fluide non représenté en figure 2. Un tel conduit d'alimentation pourrait être similaire au conduit 2 décrit précédemment en lien avec la figure 1. Ladite tuyère principale 22 est orientée sensiblement de la proue 21P vers la poupe 21S de la plateforme 21, de sorte que la direction d'expulsion de fluide DE22 s'inscrive dans un plan médian PM de la plateforme 21, ledit plan médian PM séparant une moitié bâbord d'une moitié tribord de ladite plateforme 21, lesdites moitiés n'étant pas nécessairement égales. Les moyens pour collecter et distribuer un fluide 24 coopèrent quant à eux avec la plateforme 21 selon une liaison encastrement. Le dispositif de propulsion 20 peut avantageusement comporter un ou plusieurs bras ou barres de renfort 42, coopérant avantageusement avec la plateforme 21 et la tuyère principale 22. La présence d'un tel bras 42 permet de diminuer grandement les dimensions de la plateforme 21, notamment son épaisseur et sa largeur, puisque ledit bras amortit la flexion de la plateforme 21. La figure 2 définit également, outre ledit plan médian PM, un plan transversal PT d'un tel dispositif de propulsion 20 consistant en tout plan normal audit plan médian PM, qui sépare la plateforme 21 en deux moitiés, l'une comportant la proue 21P de ladite plateforme 21 et l'autre comportant la poupe 21S de cette dernière, lesdites moitiés n'étant pas nécessairement égales. De la même manière, ladite figure 2 définit un plan longitudinal PL d'un tel dispositif de propulsion 20. Celui-ci consiste en tout plan normal à des plans transversal et médian, ledit plan longitudinal PL séparant une moitié supérieure d'une moitié inférieure de ladite plateforme 21, lesdites moitiés n'étant pas nécessairement égales. Enfin, la figure 2 présente également un axe transversal AT, consistant en un axe appartenant à la fois à un plan transversal PT et un plan longitudinal PL, ainsi qu'un axe longitudinal AL, un tel axe appartenant à la fois à un plan médian PM et un plan longitudinal PL.

A l'instar du premier dispositif de propulsion 10 illustré par la figure 1, le deuxième dispositif de propulsion 20 décrit en lien avec la figure 2, nécessite une certaine adresse de son utilisateur pour dompter la plateforme 21 et parvenir rapidement et sans apprentissage à évoluer au-dessus de la surface de l'eau. En effet, la très grande liberté de trajectoires offerte par ces deux premiers dispositifs de propulsion 10 et 20 n'est pas généralement synonyme de contrôle ou d'aisance d'évolution pour un utilisateur novice.

Antérieurement aux deux dispositifs de propulsion 10 et 20, un troisième dispositif de propulsion, non décrit dans les présentes figures, a été conçu. Un tel dispositif de propulsion est par exemple dépeint notamment dans les documents US 7,258,301 ou US 2008/0014811. Un utilisateur débutant d'un tel troisième dispositif de propulsion est certes contraint et limité dans son évolution, mais l'apprentissage lié à l'utilisation dudit troisième dispositif se veut moindre. Un tel troisième dispositif de propulsion comporte un corps principal sous la forme d'un harnais ou d'un siège, contre lequel ou dans lequel un passager peut prendre place. Un tel corps coopère solidairement avec un groupe de poussée, sous la forme notamment d'une paire de tuyères, pour éjecter un fluide sous pression et ainsi générer une force de poussée. Pour simplifier le vol du passager et en diminuer l'effort physique, les tuyères sont disposées au-dessus du centre de gravité de l'ensemble corps-passager, plus précisément au niveau des épaules du passager. La configuration des tuyères, situées au dessus du centre de gravité du dispositif de propulsion, donne l'impression au passager d'être suspendu au niveau des épaules par un crochet de grue virtuel, ce qui diminue grandement les sollicitations physiques du passager. Des moyens permettant d'orienter lesdites tuyères déterminent la trajectoire du dispositif de propulsion mais le pilotage est toutefois peu intuitif pour le passager. En outre, les phases de décollage notamment nécessitent une position initiale du passager en station debout, les pieds sur un support solide, ce qui rend quasi impossible un redécollage depuis une position immergée au large des côtes par exemple. L'effort physique du passager est certes réduit à sa plus simple expression pour se mouvoir, mais ce gain limite grandement la liberté et la variété de mouvements et de déplacements à la surface de l'eau. Par ailleurs, selon cet enseignement technique, une station de compression distante est également exploitée pour comprimer de l'eau et ainsi alimenter en fluide pressurisé ce troisième dispositif de propulsion. Ledit fluide pressurisé est aussi acheminé au moyen d'un conduit d'alimentation tel qu'une lance à incendie. Toutefois, ladite station de compression est dédiée, contrairement à celle associée aux deux premiers dispositifs de propulsion 10 et 20 précédemment évoqués. Une telle station dédiée décuple le coût d'une telle solution.

La demande de brevet US 2014/0216319 divulgue une variante de dispositif de propulsion aquatique disposant d'une assise d'une tuyère principale et de deux tuyères secondaires manoeuvrées par l'utilisateur.

La demande de brevet US 2015/0028161 divulgue un dispositif de propulsion aquatique pour faire monter et descendre une plateforme de manière stabilisée. La manoeuvrabilité de la plateforme est assurée par l'utilisation d'une pluralité de tuyères fixes disposées selon plusieurs directions combinée à un dosage de la pression du fluide expulsé par chaque tuyère.

L'invention permet de répondre à la grande majorité des inconvénients soulevés par les solutions connues.

Parmi les nombreux avantages apportés par un dispositif selon l'invention, nous pouvons mentionner que celui-ci permet :
- de mettre à la disposition des utilisateurs un dispositif très ludique qui, après un rapide apprentissage, est très facile à utiliser et propose une large variété d'applications et de trajectoires ;
- d'être en capacité de décoller et de piloter sans devoir puiser dans sa condition physique ;
- de maîtriser, voire programmer, selon le mode de réalisation retenu, une altitude nominale, l'utilisateur n'ayant plus qu'à simplement s'orienter horizontalement ;
- de proposer un dispositif de propulsion riche en variété de déplacements, et procurant, en toute sécurité et sans fatigue, de grandes sensations et une grande satisfaction dès les premières minutes d'utilisation.

A cette fin, il est notamment prévu un dispositif de propulsion comportant :
- une plateforme agencée pour qu'un passager puisse y prendre place ;
- un groupe de poussée ;
- des moyens pour collecter et distribuer un fluide pressurisé audit groupe de poussée, lesdits moyens étant alimentés en fluide pressurisé par un conduit d'alimentation, et coopérant avec la plateforme selon une liaison encastrement.

Pour maîtriser l'assiette et l'altitude d'un plan longitudinal dudit dispositif de propulsion et, in fine proposer une assistance automatique de pilotage de celui-ci à son utilisateur, le groupe de poussée comporte deux tuyères secondaires coopérant, selon une liaison fluidique, avec lesdits moyens pour collecter et distribuer un fluide pressurisé, pour être alimentées en fluide pressurisé, lesdites tuyères secondaires étant montées mobiles, chacune selon un axe transversal dudit dispositif de propulsion, ledit axe étant normal à un premier plan médian du dispositif de propulsion, ledit premier plan médian séparant une moitié bâbord d'une moitié tribord dudit dispositif de propulsion pour délivrer ledit fluide pressurisé selon des directions de fluides respectives inscrites dans des deuxièmes plans médians, distincts et parallèles audit premier plan médian du dispositif de propulsion.
En outre, les tuyères secondaires sont positionnées au-dessous du centre de gravité et sensiblement à la proue dudit dispositif de propulsion.

Pour mouvementer automatiquement les tuyères secondaires du groupe de poussée, le dispositif de propulsion comporte également un actionneur associé à chaque tuyère secondaire provoquant une rotation, suivant un axe transversal du dispositif de propulsion, de la direction d'expulsion de fluide de la tuyère secondaire concernée dans l'un desdits deuxièmes plans médians.

De tels actionneurs respectivement associés aux tuyères secondaires, sont pilotés par commandes électriques. Ledit dispositif de propulsion comporte en outre une unité de traitement conçue pour élaborer lesdites commandes électriques à partir d'une consigne de pilotage et/ou d'un référentiel déterminé par un ou plusieurs paramètres de configuration.

Selon un mode de réalisation préféré mais non limitatif, pour pouvoir mouvoir sensiblement horizontalement un dispositif de propulsion conforme à l'invention, le groupe de poussée de ce dernier peut comprendre une tuyère principale expulsant un fluide depuis une sortie de fluide selon une direction donnée, ladite tuyère principale étant orientée sensiblement de la proue vers la poupe du dispositif de propulsion de sorte que ladite direction d'expulsion de fluide s'inscrive dans un plan médian du dispositif de propulsion, ledit plan médian séparant une moitié bâbord d'une moitié tribord dudit dispositif de propulsion, ladite tuyère principale du groupe de poussée étant positionnée au-dessous du centre de gravité et sensiblement à la poupe du dispositif de propulsion.

Pour qu'un tel dispositif de propulsion ne subisse pas de contrainte imposée par le conduit d'alimentation en fluide pressurisé, les moyens pour collecter et distribuer un fluide pressurisé peuvent coopérer avec ledit conduit d'alimentation en fluide selon une liaison pivot au niveau de la partie proximale dudit conduit.

Selon un mode de réalisation préféré, la plateforme peut comporter une armature rigide, des éléments de flottabilité, un carénage, une assise sur laquelle le passager peut prendre place.

Pour faciliter l'embarquement d'un passager sur un dispositif de propulsion conforme à l'invention et in fine favoriser le décollage de celui-ci, les éléments de flottabilité peuvent avantageusement être agencés pour maintenir partiellement la proue émergée lorsque que le dispositif de propulsion est positionné à la surface d'un fluide et que ledit passager occupe une position assise sur ladite assise, ledit passager étant de corpulence moyenne.

Pour permettre à un utilisateur de modifier la trajectoire d'un dispositif de propulsion conforme à l'invention, ce dernier peut avantageusement comporter une interface homme-machine conçue pour traduire une gestuelle dudit utilisateur en :
- une consigne en changement de direction sous la forme d'une position angulaire au regard de l'assiette du plan longitudinal du dispositif de propulsion autour d'un axe longitudinal dudit dispositif de propulsion ; et/ou
- une consigne en changement d'altitude sous la forme d'une position angulaire au regard de l'assiette du plan longitudinal du dispositif de propulsion autour d'un axe transversal dudit dispositif de propulsion.

Selon ce mode de réalisation préféré, le référentiel peut traduire une assiette et une altitude de croisière de référence d'un plan longitudinal du dispositif de propulsion. Dans ce cas, un tel dispositif de propulsion selon l'invention peut comporter :
- des premier et deuxième capteurs pour mesurer les positions angulaires respectives des tuyères secondaires au regard d'une position angulaire de référence ;
- un troisième capteur délivrant une mesure du roulis et/ou une mesure du tangage subis par ledit plan longitudinal respectivement autour d'un axe longitudinal et d'un axe transversal dudit dispositif de propulsion.

Pour augmenter les performances d'un dispositif de propulsion conforme à l'invention lorsque le groupe de poussée comporte une tuyère principale, en prévenant notamment toute perte de charge inutile dans la distribution du fluide pressurisé, au moins une partie des moyens pour collecter et distribuer ledit fluide pressurisé ainsi que la tuyère principale du groupe de poussée peuvent comporter une section oblongue.

Selon un deuxième objet, l'invention concerne un système de propulsion comportant un dispositif de propulsion tel qu'explicité ci-dessus et coopérant avec une station de compression distante, ladite station alimentant en fluide pressurisé ledit dispositif de propulsion via le conduit d'alimentation.

Pour réduire les coûts d'acquisition et de maintenance d'un tel système, la station de compression distante peut avantageusement consister en un véhicule nautique à moteur comportant une coque, des moyens de propulsion comprimant par turbinage un fluide ingéré depuis une entrée et expulsant ledit fluide ainsi mis sous pression depuis une sortie de fluide à l'arrière dudit véhicule.

Selon un troisième objet, l'invention concerne un procédé de pilotage des tuyères secondaires d'un dispositif de propulsion conforme à l'invention. Un tel procédé permet d'offrir une assistance automatique de pilotage à tout utilisateur novice ou confirmé. Un tel procédé est mis en oeuvre par l'unité de traitement d'un dispositif de propulsion conforme à l'invention. Ledit procédé de pilotage comporte :
- une étape pour produire une commande pour entraîner un écart de positions relatives desdites tuyères secondaires à partir de la consigne en changement de direction et de la mesure du roulis dudit dispositif de propulsion ;
- une étape pour produire une commande de modification d'une position moyenne desdites tuyères secondaires à partir de la consigne en changement d'altitude et de la mesure du tangage dudit dispositif de propulsion ;
- une étape pour produire :
   ▪ une commande de pilotage d'une première des deux tuyères secondaires à partir d'une somme de la commande pour provoquer un écart de positions relatives des tuyères secondaires et de la commande de modification d'une position moyenne des tuyères secondaires, préalablement produites ;
   ▪ une commande de pilotage d'une deuxième desdites tuyères secondaires en retranchant ladite commande pour provoquer un écart de positions relatives des tuyères secondaires de ladite commande de modification d'une position moyenne desdites tuyères secondaires ;

- une étape pour élaborer et délivrer une commande interprétable par l'actionneur associé à la première desdites tuyères secondaires à partir de la mesure de la positon angulaire de ladite première tuyère secondaire et de ladite commande de pilotage de ladite première tuyère secondaire produite précédemment ;
- une étape pour élaborer et délivrer une commande interprétable par l'actionneur associé à la deuxième desdites tuyères secondaires à partir de la mesure de la position angulaire de ladite deuxième tuyère secondaire et de ladite commande de pilotage de ladite deuxième tuyère secondaire produite précédemment.

A titre d'exemple de réalisation préféré, l'une des étapes d'un tel procédé peut avantageusement consister à mettre en oeuvre un correcteur Proportionnel, Intégrateur, Dérivateur.

Pour maximiser l'efficacité de la mise en oeuvre d'un tel procédé, les première et deuxième desdites tuyères secondaires peuvent être respectivement positionnées à bâbord et à tribord du dispositif de propulsion.

D'autres caractéristiques et avantages apparaîtront plus clairement à la lecture de la description qui suit et à l'examen des figures qui l'accompagnent parmi lesquelles :
- la figure 1, précédemment décrite, illustre un premier mode de réalisation d'un dispositif de propulsion connu des documents US 8,336,805 et 8,608,104 ;
- la figure 2, précédemment décrite, illustre un deuxième mode de réalisation d'un dispositif de propulsion connu, tiré du document WO 2015/132478 A1 ;
- la figure 3 illustre une vue en perspective de l'ossature d'un mode de réalisation préféré mais non limitatif d'un dispositif de propulsion d'un passager conforme à l'invention ;
- les figures 4 et 4A décrivent respectivement une vue latérale et un agrandissement partiel de l'ossature d'un mode de réalisation préféré mais non limitatif d'un dispositif de propulsion d'un passager conforme à l'invention ;
- les figures 5 et 6 décrivent respectivement des vues de face et dos de l'ossature d'un mode de réalisation préféré mais non limitatif d'un dispositif de propulsion d'un passager conforme à l'invention ;
- les figures 7 et 8 présentent des vues en perspective d'un mode de réalisation préféré mais non limitatif d'un dispositif de propulsion comportant un carénage de protection conforme à l'invention ;
- la figure 9 illustre un mode de réalisation préféré mais non limitatif d'un dispositif de propulsion conforme à l'invention véhiculant deux passagers ;
- la figure 10 décrit une architecture fonctionnelle d'une unité de traitement d'un mode de réalisation préféré mais non limitatif d'un dispositif de propulsion conforme à l'invention mettant en oeuvre un procédé de pilotage des tuyères secondaires dudit dispositif de propulsion
- les figures 11A et 11B présentent des vues d'une sortie de fluide pour tuyère dont le diamètre est ajustable.

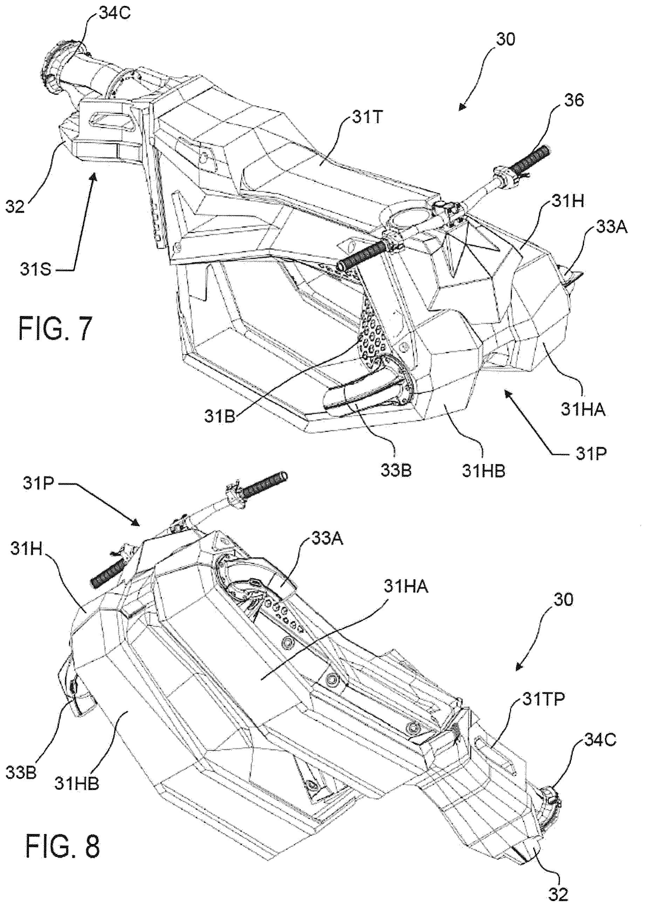

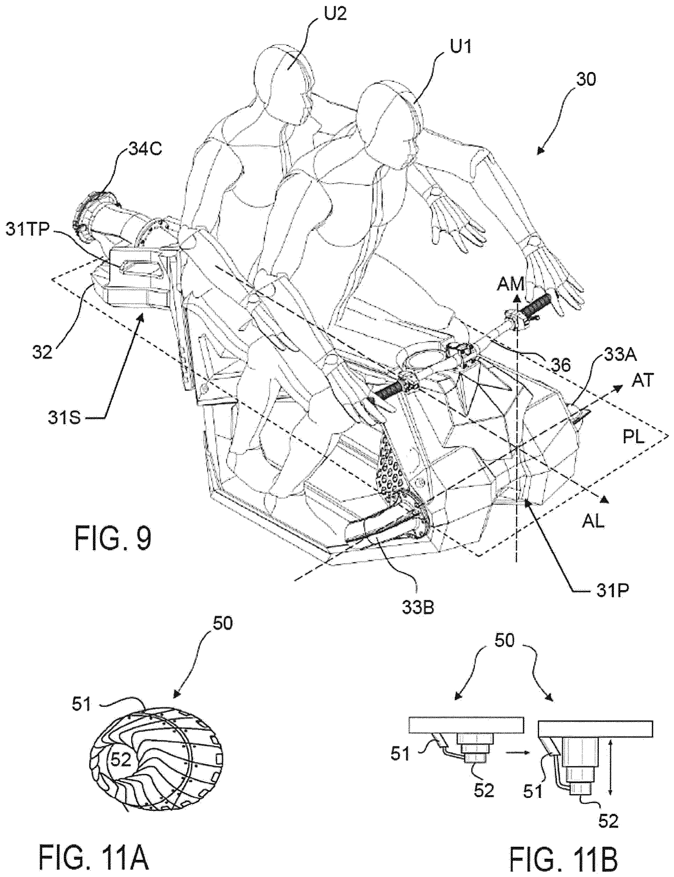

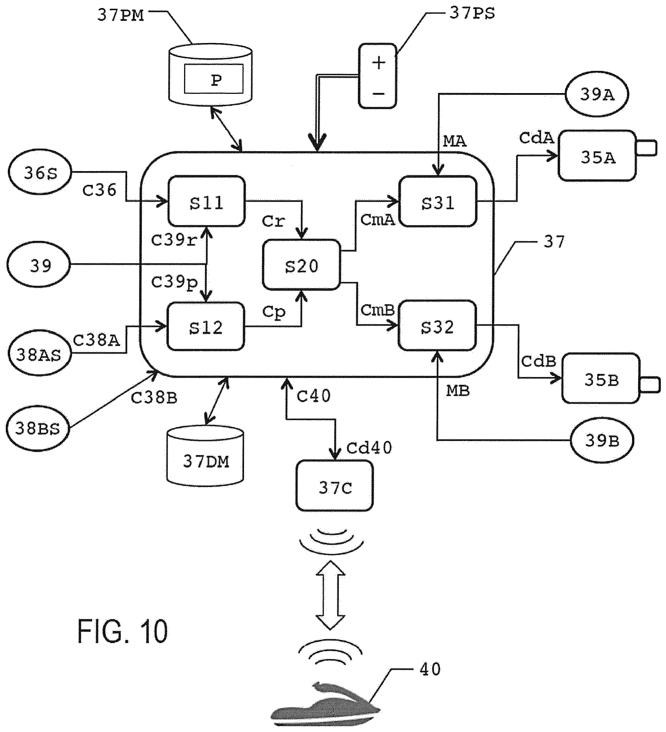

Selon un premier mode de réalisation d'un dispositif de propulsion 30 conforme à l'invention, décrit en liaison avec les figures 3 à 9, un tel dispositif 30 comporte un corps principal sous la forme d'une plateforme 31 dont seule une armature est illustrée sur les figures 3 à 6. Ladite armature coopère avec un carénage 31H, comme illustré à titre d'exemple non limitatif par les figures 7 à 9. Selon la taille de la plateforme 31 et la puissance de la station de compression distante alimentant en fluide pressurisé ledit dispositif de propulsion 30, ladite station n'étant pas représentée par mesure de simplification sur lesdites figures 3 à 9 mais simplement évoqué en lien avec la figure 10, l'invention prévoit que plusieurs passagers U1, U2 puissent éventuellement prendre position simultanément sur ledit dispositif 30. Une telle configuration est illustrée à titre d'exemple non limitatif par la figure 9.

Une telle station de compression distante, référencée 40 en figure 10, peut être un appareil dédié ou un appareil dont la fonction principale originelle est différente de l'alimentation en un fluide sous pression d'un dispositif de propulsion. A titre d'exemple, l'invention prévoit qu'un véhicule de pompier terrestre ou nautique puisse être exploité en tant que station de compression distante s'il dispose d'une capacité de compression de fluide suffisante. De manière préférée, l'invention propose de mettre à profit la capacité de compression naturelle d'un fluide d'un véhicule nautique à moteur (VNM) tel que, par exemple, le RUNABOUT MZR Edition 2011 du constructeur ZAPATA RACING.

Un tel véhicule 40 comporte une coque et héberge des moyens de propulsion comprimant par turbinage un fluide, à la surface duquel le VNM navigue, ledit fluide étant ingéré depuis une entrée aménagée sous la coque. Ledit fluide ainsi mis sous pression est expulsé depuis une sortie de fluide située à l'arrière ou à la poupe du véhicule. Une telle sortie de fluide se présente généralement sous la forme d'un cône directionnel pour modifier la trajectoire du VNM. Les moyens de propulsion sont entraînés généralement au moyen d'un moteur thermique. Afin de garantir l'utilisation du VNM comme station de compression distante 40, une bride peut être appliquée sur la sortie de fluide, puis connectée à un embout d'un conduit d'alimentation 2 pour acheminer le fluide sous pression expulsé depuis la sortie de fluide du VNM. Le conduit d'alimentation 2 est connecté, à l'autre extrémité, à l'aide d'un embout 2a à des moyens pour collecter 34C le fluide sous pression d'un dispositif de propulsion 30 conforme à l'invention comme nous le verrons ci-après.

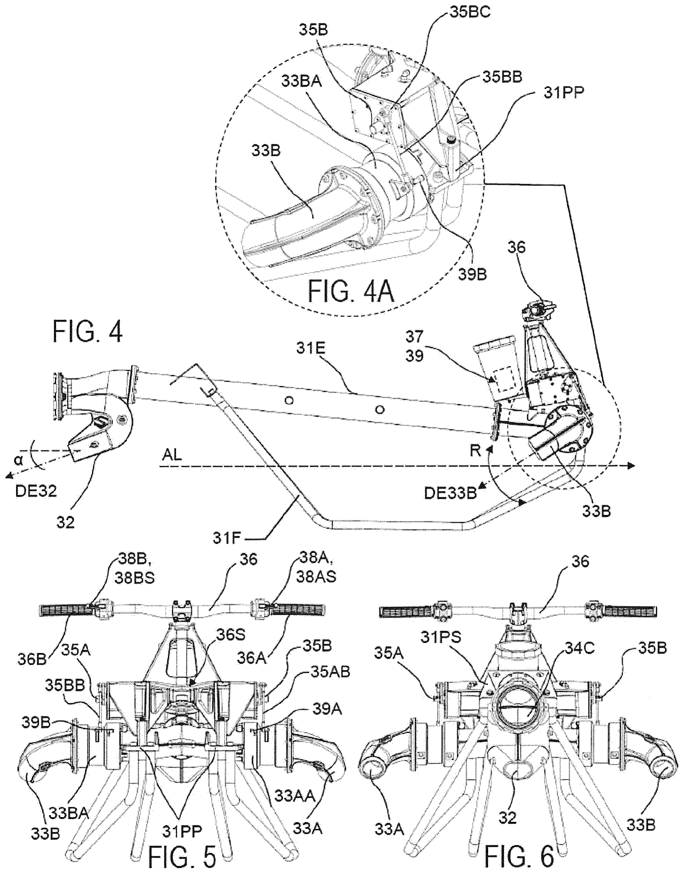

Selon la figure 3, la plateforme 31 d'un tel dispositif de propulsion 30 conforme à l'invention consiste avantageusement en une structure tubulaire comportant une pluralité de tubes 31F et/ou de poutres 31E, avantageusement creux pour en diminuer le poids. Le rôle de ladite structure 31 consiste à matérialiser une ossature ou un squelette du corps principal du dispositif de propulsion 30. Le ou les matériaux utilisables pour constituer une telle structure 31 peuvent être sélectionnés parmi l'aluminium, un alliage inoxydable, ou encore des fibres de carbone ou tous autres polymères adaptés, c'est-à-dire, plus généralement, tout matériau présentant des caractéristiques fonctionnelles privilégiant légèreté, robustesse et neutralité chimique neutre, c'est-à-dire ne provoquant aucune réaction lorsqu'il est en contact avec un milieu liquide. Comme l'indiquent les figures 3 et 4, une telle ossature tubulaire 31F peut comporter ou coopérer avec une poutre ou plus généralement un élément principal 31E rigide et creux, hébergeant ou constituant tout ou partie de moyens 34D pour distribuer un fluide compressé depuis une entrée de fluide 34C, située à la poupe 31S du dispositif de propulsion 30, vers deux tuyères secondaires et latérales 33A et 33B, situées quant à elles à la proue 31P dudit dispositif de propulsion 30. La structure tubulaire 31F peut ainsi coopérer, selon une liaison mécanique de type encastrement, avec ladite poutre principale 31E, à la poupe 31S du dispositif de propulsion 30, avec une platine 31PS prenant ainsi appui sur ladite poutre 31E, ou enchâssant celle-ci, comme l'indique la figure 3. A la proue 31P, la structure tubulaire 31F coopère avec une deuxième platine 31PP, comportant éventuellement une ou plusieurs parties solidaires, selon une liaison mécanique de type encastrement, comme l'indique les figures 3 et 5. De telles liaisons mécaniques, respectivement à la poupe 31S et à la proue 31P, peuvent consister en des fixations par vissage ou boulonnage, voire par soudage.

A l'instar du dispositif de propulsion 20 connu et décrit en liaison avec la figure 2, un dispositif de propulsion 30 conforme l'invention est défini par rapport à des plans et/ou des axes, comme le décrit notamment la figure 3. Ainsi, dans la suite de la description, nous nommerons :
- « plan médian » PM, PMA ou encore PMB, tout plan normal au dispositif de propulsion 30, séparant une moitié bâbord d'une moitié tribord dudit dispositif 30, lesdites moitiés n'étant pas nécessairement égales ;
- « plan transversal », tout plan normal à un plan médian, séparant le dispositif de propulsion 30 en deux moitiés, l'une comportant la proue 31P dudit dispositif 30 et l'autre comportant la poupe 31S de ce dernier, lesdites moitiés n'étant pas nécessairement égales ;
- « plan longitudinal », tout plan normal à des plans transversal et médian, ledit plan longitudinal séparant une moitié supérieure d'une moitié inférieure dudit dispositif 30, lesdites moitiés n'étant pas nécessairement égales ;
- « axe transversal » AT, tout axe appartenant à la fois à un plan transversal et un plan longitudinal du dispositif de propulsion 30 ;
- « axe longitudinal » AL, tout axe appartenant à la fois à un plan médian et un plan longitudinal du dispositif de propulsion 30 ;
- « axe médian » AM, tout axe appartenant à la fois à un plan médian et un plan transversal du dispositif de propulsion 30.

Un dispositif de propulsion 30, décrit en liaison avec les figures 3 à 9, comporte un groupe de poussée coopérant avec la plateforme 31.

Dans le présent document, nous utilisons le terme de « tuyère » pour définir un élément de canalisation profilé, destiné à imposer une augmentation de vitesse à un fluide en écoulement. Nous pourrons également utiliser le terme de « buse » pour caractériser un tel élément. Cette augmentation de vitesse du fluide est principalement due à une différence de sections entre l'entrée et la sortie de l'élément, la section de la sortie étant plus faible que celle de l'entrée.

Ainsi, comme l'indiquent plus précisément les figures 3, 4, 4A et 5, le corps principal ou la plateforme 31 du dispositif de propulsion 30 coopère avec deux tuyères secondaires 33A et 33B, montées mobiles en rotation selon un axe transversal AT, dont une projection dans un plan longitudinal du dispositif de propulsion 30 est normale à celle d'un axe longitudinal AL dudit dispositif de propulsion 30 dans ledit plan longitudinal. Lesdites tuyères secondaires 33A et 33B sont respectivement positionnées à bâbord et à tribord du dispositif de propulsion 30. Comme l'indique la figure 4A décrivant un agrandissement partiel de la figure 4, la tuyère 33B située à tribord du dispositif de propulsion 30, consiste en un tube creux avantageusement coudé sensiblement à quatre-vingt-dix degrés. Un tel tube coopère selon une liaison encastrement, par exemple par boulonnage ou soudure comme l'indique la figure 4A, avec un bras 33BA sensiblement droit et également creux, présentant une lumière d'une section avantageusement circulaire et sensiblement identique à celle de la tuyère secondaire avec laquelle il coopère, en l'espèce la tuyère 33B. Ledit bras 33BA coopère en outre selon une liaison mécanique de type pivot avec une première partie distale des moyens 34D pour distribuer un fluide compressé. De son côté, la tuyère secondaire 33A située à bâbord du dispositif de propulsion 30 coopère, à l'instar de la tuyères 33B, avec un bras 33AA sensiblement droit et creux présentant une lumière d'une section avantageusement circulaire et identique à celle de ladite tuyère secondaire 33A. Ledit bras 33AA coopère à son tour selon une liaison mécanique de type pivot avec une deuxième partie distale des moyens 34D pour distribuer un fluide compressé. Les deux tuyères secondaires 33A et 33B, comme l'indique la figure 5 notamment, peuvent ainsi être avantageusement agencées en miroir l'une de l'autre, de part et d'autre d'un plan médian PM du dispositif de propulsion 30 séparant sensiblement ce dernier en deux moitiés de volumes et/ou de poids respectifs similaires. Les moyens 34D pour distribuer le fluide pressurisé peuvent avantageusement consister en une structure creuse d'une forme sensiblement en 'Y' ou en 'T' . De cette manière, lesdits moyens 34D peuvent desservir, via des première et deuxième parties distales symétriques dans un plan longitudinal PL du dispositif de propulsion 30, équitablement les deux tuyères secondaires 33A et 33B via respectivement lesdits bras 33AA et 33BA depuis une entrée proximale unique coopérant, selon une liaison mécanique de type encastrement, avec des moyens 34C pour collecter de ledit fluide depuis une station de compression distante non représentée sur les figures. Comme le suggère avantageusement les figures 3 et 4, lesdits moyens 34D peuvent être confondus avec la poutre ou l'élément principal 31E de la plateforme 31, ne formant ainsi qu'une seule et même entité physique.

Pour modifier l'orientation de chaque tuyère secondaire 33A et 33B dans respectivement deux plans médians PMA et PMB distincts, un dispositif de propulsion 30 conforme à l'invention comporte deux actionneurs 35A et 35B associés respectivement auxdites tuyères secondaires 33A et 33B. La figure 4A, pour ce qui concerne la tuyère secondaire 33B, décrit un actionneur 35B sous la forme d'un moteur électrique dont un axe mouvementant une came est visible sur la figure 4A. Ladite came coopère avec le bras 35BA, donc indirectement avec la tuyère 33B, via une bielle 35BB dont les extrémités coopèrent respectivement par des liaisons mécaniques de type pivot avec la came et le bras 33BA. De cette manière, une rotation de l'arbre du moteur 35B provoque une rotation R de la sortie de fluide DE33B de la tuyère 33B dans un plan médian du dispositif de propulsion 30. La deuxième tuyère secondaire 33A coopère également, comme le suggère la figure 5 notamment, avec un axe d'un actionneur 35A via une bielle 35AB. Ainsi, les deux tuyères secondaires 33A et 33B peuvent être orientées, indépendamment l'une de l'autre, sous l'action des actionneurs 35A et 35B, tout en étant conjointement alimentées en fluide pressurisé depuis les moyens 34D via les bras respectifs 33AA et 33BA. Comme nous le verrons ultérieurement, lesdits actionneurs 35A et 35B sont pilotés par une unité de traitement 37 chargée d'assurer une maîtrise totale de l'assiette et des trajectoires du dispositif de propulsion 30, par une exploitation conjointe de consignes de pilotage et de mesures émanant de capteurs. A ce titre, chaque actionneur 35A ou 35B, ou plus généralement chaque tuyère secondaire 33A ou 33B, est associée à un capteur, non représenté sur les figures, chargé de délivrer à ladite unité de traitement 37 une représentation numérique ou analogique de la position angulaire de la direction d'éjection de fluide DE33A ou DE33B. D'autres capteurs, tels un accéléromètre, un gyroscope et/ou encore un altimètre, pourront être exploités pour informer ladite unité de traitement 37 quant aux déplacements ou à la position relative au regard de la surface de l'eau au dessus ou à partir de laquelle le dispositif de propulsion 30 évolue. Un ou plusieurs autres capteurs pourront également mesurer et la pression du fluide pressurisé circulant dans les moyens de distribution 34D et transmettre une représentation de ladite mesure à ladite unité de traitement 37. Une telle unité de traitement 37 peut en outre piloter l'actionneur 51 d'une sortie de fluide 50, lorsque l'une des tuyères principales 32 ou secondaires 33A, 33B en comporte pour réguler la force de poussée délivrée par ladite tuyère. Enfin, comme l'indique les figures 3 à 9, un tel dispositif peut comporter une interface homme-machine 36, de type guidon d'une bicyclette, présentant deux surfaces de préemption ou poignées 36A et 36B pour traduire une gestuelle opérée par un utilisateur U1 dudit dispositif de propulsion en consignes de trajectoire. Une telle interface 36 peut être montée mobile selon un axe sensiblement médian AM, à l'instar d'un guidon d'un véhicule nautique à moteur, ou bien sensiblement fixe et associée à un capteur 36S, non représenté sur la figure 3, ledit capteur 36S chargé de mesurer l'effort en rotation ou couple autour dudit axe médian AM appliqué, via les poignées 36A et 36B, par le passager U1 cherchant à mouvementer ledit guidon et traduire ledit couple en une consigne d'orientation. Un tel guidon 36 peut être associé à une pluralité d'interfaces homme-machine secondaires comme des leviers de commande 38A et 38B comme l'indique à titre d'exemple non limitatif la figure 5, pour traduire une consigne de puissance de compression du fluide ou encore une consigne de changement d'altitude, consigne dite de « trim » selon une terminologie anglo-saxonne. L'invention ne saurait se limiter à ces seuls exemples de capteurs et/ou d'interfaces homme-machine, tels que décrits par les figures 3 à 6. D'autres interfaces homme-machine permettant de sortir ou délivrer une information visuelle, vibratoire ou sonore à l'attention du passager U1, quant au fonctionnement, au sens large, du dispositif de propulsion 30 pourraient être associées et avantageusement disposées sur ledit guidon 36 ou sur toute autre partie dudit dispositif de propulsion 30 à la condition que la ou les informations délivrées par de telles interfaces, sous des formes non exhaustives d'une source lumineuse, d'un haut-parleur, d'un vibreur, etc., puisse être accessible à l'utilisateur U1 au moyen de l'un de ses sens.

Le groupe de poussée chargé de mouvoir ledit dispositif de propulsion 30 peut comporter, outre les tuyères secondaires 33A et 33B dudit dispositif de propulsion, une tuyère principale 32 coopérant avec la plateforme 31, et les moyens 34D pour délivrer le fluide pressurisé, ou comme l'indiquent notamment les figures 3 et 4, directement et avantageusement avec les moyens 34C pour collecter le fluide pressurisé. Une telle tuyère principale 32 assure essentiellement la fonction de propulsion, les tuyères secondaires étant positionnées de manières latérales, c'est-à-dire de part et d'autre d'un plan médian PM du dispositif de propulsion 30, et ainsi principalement chargées d'orienter les trajectoires dudit dispositif 30 et de maîtriser l'assiette de ce dernier. Selon les figures 3 à 9, la tuyère principale 32 est positionnée à la poupe 31S du dispositif de propulsion 30 dont la sortie de fluide DE32 est orientée de la proue 31P, c'est-à-dire l'avant, vers ladite poupe 31S, c'est-à-dire l'arrière, de ladite plateforme 31. Une telle orientation contribue avantageusement au déplacement sensiblement parallèle à la surface du fluide au-dessus duquel le dispositif de propulsion 30 selon l'invention évolue. En variante ou en complément, un tel dispositif de propulsion peut comporter une pluralité de tuyères principales.

Comme l'indique l'exemple non limitatif illustré par la figure 3, ladite tuyère principale 32 peut être fixée selon une liaison mécanique de type encastrement par tous moyens au corps ou à la plateforme 31 du dispositif de propulsion 30 ou aux moyens pour collecter le fluide pressurisé 34C. Une telle liaison encastrement permet notamment que la tuyère principale 32 puisse demeurer solidaire de la plateforme 31 et qu'aucun mouvement relatif ne soit rendu possible entre ladite tuyère principale 32 et ladite plateforme 31. Selon une autre variante, la sortie de fluide de ladite tuyère principale 32 pourrait être montée mobile au regard de la plateforme 31. Dans tous les cas, la direction de sortie du fluide DE32 d'une tuyère principale 32 est située dans un plan médian PM, ledit plan médian PM comprenant un axe longitudinal AL dudit dispositif de propulsion 30. Comme le décrit la figure 4, le fluide est ainsi expulsé de la tuyère principale 32 selon un angle α au regard d'un axe longitudinal AL. L'angle α, décrit entre la direction d'expulsion de fluide DE32 et ledit axe longitudinal AL, est avantageusement compris entre 0° et +45° afin d'assurer un déplacement rapide et optimal au plus proche de la surface de fluide et de permettre une liberté totale d'utilisation du dispositif de propulsion 30. Lorsque la valeur de l'angle α est sensiblement nulle, la direction de sortie de fluide DE32 est sensiblement confondue avec l'axe longitudinal AL. Lorsque ledit angle α est supérieur, ladite direction d'éjection de fluide DE32 est orientée en direction de la surface du fluide au dessus duquel ledit dispositif de propulsion 30 évolue. L'angle α peut être fixe ou en variante, être pilotable, via un actionneur, non représenté sur les figures 3 à 9, depuis l'unité de traitement 37.

Par ailleurs, la tuyère principale 32, avantageusement réalisée à partir d'un corps creux et courbe, peut avoir une lumière de section sensiblement circulaire ou avantageusement oblongue comme l'indiquent les figures 3 et 4. Le terme « oblong » désigne une forme allongée, plus longue que large et dont les angles sont arrondis. Cette configuration permet notamment, pour une même puissance de station de compression, une diminution des pertes de charges au sein d'un dispositif de propulsion 30 et un décuplement des performances d'un tel dispositif de propulsion 30.

Par ailleurs, en variante ou en complément, conformément à un exemple de réalisation décrit en lien avec les figures 11A et 11B, la tuyère principale 32 et/ou l'une des tuyères secondaires 33A, 33B dudit dispositif de propulsion 30 peuvent comporter chacune une sortie de fluide 50, présentant une lumière 52 dont le diamètre est ajustable. L'emploi de ladite sortie de fluide 50 s'avère particulièrement avantageux, puisqu'il permet d'ajuster sélectivement le diamètre de la lumière 52, d'affecter ainsi la vitesse de circulation du fluide dans la tuyère, et de réguler finalement la force de poussée délivrée par ladite tuyère. Selon de telles figures 11A et 11B, une telle sortie de fluide 50 peut comprendre des moyens de rétrécissement ou de réduction de diamètre, tel qu'à titre d'exemple non limitatif décrit en lien avec les figures 11A et 11B, un diaphragme conique ajustable (également connu sous la terminologie anglo-saxonne « iris »), ou tout autre élément équivalent agissant tel un noeud coulant qui comprime et relâche un segment flexible de la sortie de fluide pour modifier le diamètre de la lumière 52 de la sortie de fluide 50. L'invention ne saurait toutefois être limitée à ces seuls agencements de moyens de rétrécissement ou de réduction de diamètre de sortie de fluide 50. Pour mettre en oeuvre les moyens de rétrécissement ou de réduction de diamètre d'une telle sortie de fluide 50, cette dernière peut comporter un actionneur 51 coopérant avec lesdits moyens de rétrécissement.

Nous pouvons remarquer que, contrairement à certains dispositifs de propulsion connus, pour lesquels les tuyères du groupe de poussée sont nécessairement positionnées au-dessus dudit centre de gravité pour supprimer tout effort physique du passager, celui-ci ayant l'impression d'être « porté » par un crochet de grue virtuel, au détriment de la capacité à se mouvoir dudit passager, les tuyères principale(s) et secondaires du groupe de poussée d'un dispositif de propulsion 30 conforme à l'invention sont positionnées en-dessous dudit centre de gravité. Le dispositif de propulsion 30 conserve alors tous degrés de liberté pour se mouvoir et, grâce à une assistance particulièrement innovante, éventuellement débrayable sur demande ou autorisation expresse délivrée par une unité de traitement 37, dont nous étudierons plus en détail de mode de fonctionnement en liaison notamment avec la figure 10, le passager U1 et/ou U2 a l'impression instinctivement de piloter très naturellement, sans effort ni danger, son dispositif de propulsion 30. Ainsi, l'agilité ou le physique intrinsèque dudit passager n'est plus un critère de succès et de réussite. Les sensations et le plaisir procurés sont préservés, tout en offrant une grande sécurité et une étonnante simplicité d'utilisation dès les premières minutes.

Pour « carrosser » la plateforme 31 d'un dispositif de propulsion 30 conforme à l'invention, celui-ci comporte avantageusement, comme l'indique les figures 7 et 8, un carénage 31H composé d'un ou plusieurs éléments. Selon l'exemple non limitatif décrit en liaison avec lesdites figures, un tel carénage enveloppe d'une part la plateforme 31 mais aussi les moyens 34D de distribution de fluide pressurisé, exception faite des tuyères secondaires, de sorte que ces dernières demeurent parfaitement mobiles en rotation R comme décrit précédemment en lien avec les figures 4 et 4A. En outre, un tel carénage n'enveloppe pas la tuyère principale 32 et les moyens de collecte dudit fluide pressurisé 34C, qui, comme l'indiquent les figure 3 et 6, consistent en une ouverture de section circulaire agencée pour accueillir la partie distale 2a d'un conduit 2 d'alimentation en fluide pressurisé chargée d'acheminer ce dernier depuis une station de compression distante non représentée sur les figures. Dudit carénage 31H émergent aussi les interfaces homme-machine 36, 38A, 38B permettant au passager principal U1 de consigner l'unité de traitement 37. Celle-ci est protégée de tout contact avec le milieu liquide dans lequel ou au-dessus duquel le dispositif de propulsion 30 est destiné à évoluer. Une telle protection peut consister en un caisson étanche au sein duquel les organes électroniques sensibles sont intégrés. En outre, le carénage 31H offre avantageusement, comme l'indique l'exemple non limitatif illustré par la figure 7, une assise ou selle 31T. Celle-ci peut être relativement similaire à celle équipant un véhicule nautique à moteur par exemple. De cette manière, comme l'indique la figure 9, un, voire deux utilisateurs U1 et U2 peuvent prendre position sur ledit dispositif 30. Pour protéger notamment les pieds du ou des passagers U1, U2, le carénage 31H est conjointement agencé avec la plateforme 31, plus précisément avec la structure tubulaire 31F, pour décrire deux supports inférieurs longitudinaux 31HA et 31HB, en forme de 'U', présentant avantageusement une section centrale plane destinée à accueillir l'un des pieds d'un des passagers U1 ou U2. D'autres configurations dudit carénage pourraient également être envisagées. Celle décrite en figures 7 et 8 permet notamment de réduire le volume et l'aire immergée lorsque le dispositif de propulsion est partiellement immergé, tel un catamaran. En outre, chaque support de pied ainsi matérialisé présente une portion inclinée vers la proue 31P afin de diminuer les chocs éventuels lorsque le dispositif de propulsion 30 heurte la surface du fluide au-dessus duquel il évolue ou lors de tout amerrissage.

Le carénage 31H peut être avantageusement réalisé à partir d'un ou plusieurs matériaux présentant, seul ou en combinaison, une rigidité suffisante pour soutenir le poids du ou des passagers U1 et U2 et prévenir ainsi toute déformation excessive dudit carénage durant l'utilisation du dispositif de propulsion 30. On pourra avoir recours à des fibres de verre ou de carbone tressées, mélangées à une ou plusieurs résines, ou plus généralement tout autre matériau adapté et inerte au contact d'un fluide.

L'un des objectifs d'un dispositif de propulsion 30 conforme à l'invention est de permettre à tous de pouvoir évoluer aisément à la surface d'un fluide, comme à la surface d'une mer ou d'un lac. Pour cela, un passager U1 ou U2 doit pouvoir prendre position sur ledit dispositif 30, comme l'indique la figure 9, alors que ledit dispositif est positionné dans ledit fluide, c'est-à-dire partiellement immergé. Un tel dispositif doit ainsi comporter des éléments de flottabilité 31B, agencés et disposés pour maintenir partiellement la proue 31P dudit dispositif 30 émergée lorsque que ce dernier est positionné à la surface d'un fluide et qu'un passager U1 présente une corpulence moyenne, c'est-à-dire pesant de l'ordre de quatre-vingts à cent kilogrammes. De tels éléments de flottabilité 31B peuvent être réalisés à partir d'un ou plusieurs matériaux tels qu'à titre d'exemples non limitatifs, une mousse syntactique ou une mousse de polyuréthane. Un tel agencement facilite l'étape de « décollage » en conférant un équilibre optimal pour le passager.

Le carénage 31H peut comporter des ouvertures traversant la paroi du carénage, dont les lumières respectives et avantageusement coniques présentent des axes longitudinaux sensiblement parallèles à un axe médian AM du dispositif de propulsion 30, et dont les extrémités de lumières supérieures présentent des sections de dimensions inférieures à celles des extrémités inférieures desdites lumières. De cette manière, le fluide, au sein duquel un dispositif de propulsion 30 est partiellement immergé, peut être aisément évacué grâce à la gravité, allégeant rapidement ainsi le poids dudit dispositif de propulsion 30 en phase de décollage. Ledit carénage 31H peut en outre comporter des ouvertures ou protubérances 31TP, offrant à un passager U1 ou U2 des plages de préemption afin de se maintenir sur le dispositif de propulsion 30 pendant que celui-ci évolue. Les figures 8 et 9 illustrent ainsi une ouverture latérale 31TP pratiquée dans le carénage 31H, vers la proue 31S, permettant au passager U2 de se cramponner si nécessaire à l'engin 30.

Pour que le dispositif de propulsion 30 puisse éventuellement et avantageusement délivrer une assistance particulièrement innovante, bien que débrayable éventuellement sur demande ou autorisation expresse, à son utilisateur, étudions à présent, en liaison avec un exemple non limitatif illustré par la figure 10, une architecture fonctionnelle selon laquelle différents organes de consigne et/ou de contrôle du fonctionnement dudit dispositif de propulsion permettent de mettre en oeuvre un procédé de pilotage des tuyères secondaires dudit dispositif de propulsion 30, assistant ainsi, voire contrôlant les trajectoires, assiettes et altitudes en réponse à des consignes de l'utilisateur, voire d'un tiers distant dudit dispositif de propulsion 30, tel qu'un instructeur par exemple, lesdites consignes étant filtrées au regard d'un contexte de fonctionnement personnalisable selon le mode de réalisation d'un tel dispositif de propulsion 30 conforme à l'invention, pour ne conserver et ne traduire en ordres que celles considérées comme pertinentes par l'unité de traitement 37 dudit dispositif de propulsion 30.

En liaison avec les figures 5 et 10, un tel dispositif de propulsion 30 développant une assistance automatique à son utilisateur comporte une unité de traitement 37 sous la forme d'un ou plusieurs microcontrôleurs ou processeurs, voire encore de convertisseurs de signaux numériques-analogiques. Ladite unité de traitement 37 est notamment chargée de délivrer des commandes de pilotage CdA et CdB des actionneurs 35A et 35B, mouvementant en rotation les tuyères secondaires 33A et 33B respectivement associées auxdits actionneurs 35A et 35B. Pour délivrer de telles commandes de pilotage CdA et CdB, ces dernières doivent être élaborées par la mise en oeuvre d'un procédé de pilotage desdites tuyères secondaires. La mise en oeuvre d'un tel procédé, dont les principales étapes S11, S12, S20, S31 et S32 sont illustrées en figure 10, par l'unité de traitement 37 peut être avantageusement provoquée par l'interprétation ou l'exécution d'instructions d'un produit programme d'ordinateur P dont lesdites instructions ont été préalablement chargées ou inscrites dans une mémoire de programmes 37MP coopérant, via un bus de communication filaire ou par couplage, avec ladite unité de traitement 37. Une telle unité de traitement 37 peut en outre comporter ou coopérer avec, à l'instar de la mémoire de programmes 37MP, une mémoire de données 37DM destinée à recueillir des données délivrées par d'autres organes, par exemple de capteurs et/ou d'interfaces homme-machine de consigne, avant ou après traitement par l'unité de traitement 37. Une telle mémoire de données 37DM enregistre un ou plusieurs paramètres de configuration limitant les degrés de liberté que l'on souhaite accorder à l'utilisateur pilote U1 du dispositif de propulsion 30. De tels paramètres de configuration déterminent un référentiel, par exemple, sous la forme d'une altitude et/ou d'une vitesse de propulsion maximales, relatives à un passager U1 de corpulence moyenne pilotant ledit dispositif de propulsion 30.

Comme évoqué précédemment en liaison avec les figures 3, 5 et 6 notamment, ledit utilisateur U1 peut renseigner l'unité de traitement 37, par exemple par une gestuelle déterminée, d'un souhait de changement de trajectoire ou d'altitude. Pour cela, le dispositif de propulsion 30, conforme à un mode préféré de réalisation de l'invention et décrit en lien avec lesdites figures 3, 5 et 6, comporte une première interface homme-machine 36 sous la forme avantageuse d'un guidon de véhicule nautique à moteur ou de bicyclette. La course en rotation ou le couple appliqué sur ledit guidon 36 par l'utilisateur pilote U1 peut être mesuré par un capteur adapté 36S, par exemple un capteur inductif avantageusement à effet Hall, un tel capteur étant particulièrement précis grâce à sa fonction d'amplification du signal de mesure limitant ainsi tout bruit résultant de l'environnement. Un signal C36 délivré par un tel capteur 36S est considéré comme traduisant une consigne de changement de direction sous la forme d'une position angulaire, de nature à engendrer un roulis découlant d'un changement de trajectoire pour une altitude donnée. Ledit guidon 36 peut en outre comporter deux autres interfaces homme-machine de consigne 38A et 38B, par exemple sous la forme de leviers ou de boutons, pour qu'un utilisateur U1 puisse renseigner ou consigner respectivement une augmentation ou une diminution souhaitée de la puissance de compression de la station de compression de fluide distante, alimentant ledit dispositif de propulsion 30 en fluide pressurisé, et une augmentation ou une diminution souhaitée d'altitude au regard d'une altitude de croisière nominale déterminée, grâce à un paramètre de configuration enregistré dans une mémoire de données 37DM ou de programmes 37PM. De tels leviers 38A et 38B peuvent, à l'instar de la course du guidon 36, être associés respectivement à des capteurs 38BS et 38AS, par exemple des capteurs à effet Hall. Le capteur 38BS peut être agencé pour délivrer un signal C38B traduisant une amplitude de croissance et/ou de décroissance de la puissance de compression de la station de compression distante 40. Le capteur 38AS est agencé pour délivrer un signal C38A traduisant une consigne de changement d'altitude ou « trim » au regard de l'altitude nominale ou « de croisière », par exemple sous la forme d'une position angulaire de nature à provoquer un tangage découlant d'un changement de l'altitude au regard d'une assiette nominale donnée sensiblement horizontale. D'autres capteurs pourraient en variante et/ou en complément être associés à d'autres interfaces homme-machine de consigne. De telles interfaces pourraient elles-mêmes délivrer directement des données ou signaux caractérisant des consignes de l'utilisateur du dispositif de propulsion 30. Pour asservir l'assiette et/ou la trajectoire courantes au regard d'une assiette et trajectoire nominales, l'unité de traitement 37 coopère avantageusement, par voie filaire ou sans fil, avec un ou plusieurs capteurs 39, avantageusement un ensemble de capteurs, tels que des gyroscopes, sur trois axes permettant de définir à chaque instant la position courante d'un dispositif de propulsion 30 conforme à l'invention dans l'espace, grâce aux accélérations et aux champs magnétiques qu'ils subissent. Un tel ensemble de capteurs préféré, équipant par exemple des aéronefs, est connu sous l'acronyme AHRS, pour « Attitude and Heading Reference System » selon une terminologie anglo-saxonne ou encore sous l'appellation de « centrale inertielle ». Ledit ensemble de capteurs 39 exploite des vibrations permettant de mesurer des changements de direction ou encore l'accélération de la gravité pour donner une référence verticale. De tels capteurs 39 délivrent ainsi deux types de signaux ou données C39r et C39p traduisant respectivement une mesure du roulis et une mesure du tangage, lesdits roulis et tangage étant décrits par le dispositif de propulsion 30.

Connaissant les mesures des roulis et tangage du dispositif de propulsion ainsi qu'une consigne de « trim » ou de changement de direction, l'unité de traitement 37 peut mettre en oeuvre un procédé de pilotage des tuyères secondaires 33A et 33B pour tenter de ramener ledit dispositif de propulsion 30 vers une assiette sensiblement horizontale et une direction rectiligne. Un roulis peut ainsi être vu comme une erreur de position angulaire décrite par l'assiette d'un plan longitudinal PL dudit dispositif de propulsion 30 autour d'un axe longitudinal AL du dispositif de propulsion 30. Il en est de même pour une consigne de changement de direction qui peut être vue comme une erreur de position provoquée au regard de l'assiette courante. Ainsi, l'unité de traitement 37 met en oeuvre une étape S11 pour produire une commande Cr pour entraîner un écart de positions relatives des tuyères secondaires 33A et 33B, de nature à engendrer lui-même un changement de direction et ainsi corriger automatiquement l'assiette courante. La commande Cr peut être avantageusement produite par la mise en oeuvre en une étape S11 d'un correcteur PID (Proportionnel, Intégrateur, Dérivateur), permettant ainsi un asservissement automatique de l'assiette du dispositif de propulsion 30, prenant en entrée ou consigne, d'une part, la consigne C36 décrivant une position du guidon 36 ou un couple appliqué sur celui-ci traduite par le capteur 36S en une position angulaire au regard dudit axe longitudinal AL par rapport à une assiette d'un plan longitudinal PL dudit dispositif de propulsion 30 sensiblement horizontale et d'autre part, le signal ou données C39r traduisant une mesure du roulis délivrée par le capteur 39. Toute autre fonction ou algorithme pourrait être mis en oeuvre en variante ou en complément à l'étape S11.

Par ailleurs, un tangage peut être vu comme une erreur de position angulaire décrite par l'assiette d'un plan longitudinal PL dudit dispositif de propulsion 30, autour d'un axe transversal AT dudit dispositif de propulsion 30 par rapport à une assiette sensiblement horizontale. Il en est de même pour une consigne de changement d'altitude qui peut être vue comme une erreur de position angulaire au regard de l'assiette courante autour d'un axe transversal AT dudit dispositif de propulsion 30. Ainsi, l'unité de traitement 37 met en oeuvre une étape S12 pour produire une commande Cp de modification d'une position moyenne des tuyères secondaires de nature à provoquer un changement d'altitude et ainsi corriger l'assiette courante. La commande Cp peut être avantageusement produite par la mise en oeuvre en l'étape S12 d'un correcteur PID (acronyme de « Proportionnel, Intégrateur, Dérivateur ») permettant ainsi un asservissement de l'assiette PL du dispositif de propulsion 30 prenant en entrée, d'une part, la consigne C38A, décrivant une position du levier 38A traduite par le capteur 38AS en une position angulaire au regard dudit axe transversal AT par rapport à une assiette d'un plan longitudinal PL sensiblement horizontale, et d'autre part, le signal ou les données C39p traduisant une mesure du tangage délivrée par le capteur 39. Toute autre fonction ou algorithme pourrait être mis en oeuvre en variante ou en complément à l'étape S12.

Pour corriger, c'est-à-dire en quelque sorte tendre à annuler, automatiquement les phénomènes de roulis et de tangage tout en intégrant les consignes éventuelles de changement de direction et/ou d'altitude transmises par l'utilisateur U1, le procédé de pilotage des tuyères secondaires 33A et 33B mis en oeuvre par l'unité de traitement 37 comporte en outre une étape S20 pour produire des consignes CmA et CmB de pilotage des tuyères 33A et 33B respectives. A titre d'exemple non limitatif, une telle étape S20 consiste à produire la commande CmA de pilotage de la tuyère secondaire 33A, c'est-à-dire la tuyère secondaire 33A montée rotative autour d'un axe transversal AT et positionnée à bâbord du dispositif de propulsion 30 décrit en lien avec figure 3, en sommant la commande Cr pour provoquer un écart de positions relatives des tuyères secondaires 33A et 33B et la commande Cp de modification d'une position moyenne des tuyères secondaires. Ladite étape S20 consiste en outre à produire la commande CmB de pilotage de la tuyère secondaire 33B, c'est-à-dire la tuyère secondaire montée rotative autour d'un axe transversal AT et positionnée à tribord du dispositif de propulsion 30 décrit en lien avec figure 3, en soustrayant la commande Cr pour provoquer un écart de positions relatives des tuyères secondaires 33A et 33B, à la commande Cp de modification d'une position moyenne desdites tuyères secondaires 33A et 33B.

Pour in fine piloter les actionneurs 35A et 35B mouvementant lesdites tuyères secondaires 33A et 33B, en tenant compte conjointement des positions courantes desdites tuyères secondaires 33A et 33B et desdites commandes de pilotage CmA et CmB respectives desdites tuyères secondaires 33A et 33B préalablement produites à l'étape S20, le procédé de pilotage, mis en oeuvre par l'unité de traitement 37 et décrit en lien avec la figure 10, comporte deux étapes S31 et S32 pour délivrer respectivement des commandes CdA et CdB, par exemple en vitesse ou en position, selon le type d'actionneur considéré, des actionneurs 35A et 35B chargés de mouvementer les tuyères secondaires 33A et 33B en rotation autour d'un axe transversal AT dudit dispositif de propulsion 30.

A titre d'exemple préféré et non limitatif, l'étape S31 pour délivrer la commande CdA de l'actionneur 35A pilotant la tuyère secondaire 33A positionnée à bâbord du dispositif de propulsion 30, peut consister à asservir ledit actionneur 35A par la mise en oeuvre d'un correcteur PID prenant en entrée, d'une part, la mesure angulaire MA d'un axe dudit actionneur 35A et/ou de la positon angulaire de la tuyère 33A au regard d'un référentiel donné, délivrée par le capteur 39A, et d'autre part, ladite commande de pilotage CmA produite précédemment à l'étape S20.

De son côté l'étape S32, concomitante à l'étape S31 précédemment décrite, pour délivrer la commande CdB de l'actionneur 35B pilotant la tuyère secondaire 33B positionnée à tribord du dispositif de propulsion 30, peut consister à asservir ledit actionneur 35B par la mise en oeuvre d'un correcteur PID prenant en entrée, d'une part, la mesure angulaire MB d'un axe dudit actionneur 35B et/ou de la positon angulaire de la tuyère 33B au regard d'un référentiel donné, délivrée par le capteur 39B, et d'autre part, ladite commande de pilotage CmB produite précédemment à l'étape S20.

L'exemple de procédé de pilotage des tuyères secondaires ainsi décrit pourrait comporter d'autres étapes intermédiaires pour tenir compte d'autres mesures, comme par exemple la pression du fluide alimentant le groupe de poussée 32, 33A et 33B dudit dispositif de propulsion 30 ou d'autres consignes complémentaires, comme par exemple, une consigne visant à modifier l'altitude et/ou l'incidence de l'assiette nominale.

Nous pouvons remarquer, qu'en l'absence de toute consigne de changement de direction et/ou d'altitude consigné par l'utilisateur, la mise en œuvre du procédé de pilotage des tuyères secondaires, permet automatiquement de compenser tout tangage et/ou tout roulis conférant ainsi un assistance de pilotage et un confort inégalés pour le ou les passagers.

Par ailleurs, un dispositif de propulsion 30 décrit en liaison avec les figures 3 à 10 peut comporter une interface de consigne 38B permettant de modifier la puissance de compression de la station de compression distante 40 alimentation en fluide pressurisé le dispositif de propulsion 30 via le conduit 2. A titre d'exemple non limitatif, l'unité de traitement 37 peut en outre tenir compte de la consigne C38B de l'utilisateur U1 via l'interface 38B, traduite par le capteur associé 38BS, d'une puissance nominale éventuelle déterminée par un paramètre de configuration, pour délivrer un signal de commande Cd40 de la puissance de compression de la station distante 40. Une telle production d'un signal de commande peut être similaire à celle d'ores et déjà connue en lien avec le dispositif de propulsion 20. Une telle commande peut être transmise par les airs, donc selon une communication sans fil, ou en variante par voie filaire, via des moyens de communication 37C adapté et coopérant avec l'unité de traitement 37.

Une phase de décollage et, à un degré moindre, une phase d'amerrissage, peut être délicate pour un utilisateur U1 d'un dispositif de propulsion 30, peu habitué ou débutant. L'invention prévoit à cet effet, qu'un dispositif de propulsion 30 tel que décrit précédemment, puisse délivrer une assistance particulièrement précieuse et automatique durant ces phases critiques.

Ainsi, pour préparer un décollage, un passager U1, voire un deuxième U2, doit tout d'abord prendre position sur l'assise 31T. Lorsque le dispositif de propulsion 30 est partiellement immergé et que le moteur de la station de compression distante est au ralenti, bien que les moyens de flottabilité 31B aident le ou lesdits passagers U1 et/ou U2 à conserver leurs positions sur l'assise 31T, l'équilibre de l'embarcation avant le décollage peut être jugé précaire ou anxiogène pour certains. Dès que le passager-pilote U1 actionne légèrement une interface homme-machine de consigne, par exemple l'interface 38, ou la manette des gaz, c'est-à-dire l'interface permettant de réguler la puissance de la station de compression distante, ou encore dès que l'assiette dudit dispositif de propulsion est brutalement modifiée par l'arrivée d'un passager, l'unité de traitement 37 peut délivrer durant une durée déterminée et paramétrable, par exemple durant une vingtaine de secondes, une assistance automatique assurant une excellente stabilisation du dispositif de propulsion 30. Un tel résultat peut être obtenu et provoqué par l'unité de traitement 37 en agissant conjointement sur la puissance de compression de fluide de la station de compression distante et sur l'orientation des tuyères secondaires. Pour cela, il est nécessaire que ladite unité de traitement 37 puisse prendre en considération la pression du fluide circulant dans les moyens 34D pour délivrer celui-ci aux tuyères principale(s) et secondaires. Cette information peut être délivrée par un ou plusieurs capteurs, non référencés sur les figures 3 à 9, comme évoqué précédemment. Ladite pression du fluide va constituer ainsi, pour l'unité de traitement 37, un paramètre d'ajustement des fonctions mises en œuvre aux étapes S11, S12, S31 et/ou S32 décrites en liaison avec la figure 10. En effet, lorsque la pression du fluide alimentant le groupe de poussée du dispositif de propulsion 30 est faible, il est pertinent d'augmenter la sensibilité du procédé de pilotage des tuyères secondaire, de sorte à « sur-corriger » le tangage et/ou le roulis. En revanche, lorsque la pression dudit fluide est haute, par exemple lorsque l'on a atteint une trajectoire de croisière, la sensibilité dudit procédé de pilotage des tuyères secondaires peut être réduite, de sorte à limiter le ressenti pour le passager U1 de corrections brutales et excessives desdits roulis et tangage.

Revenons à la phase de décollage assistée. Lorsque ledit passager-pilote U1, tout en actionnant modérément, par exemple en deçà d'un seuil déterminé, l'interface 38, voire toute autre interface éventuellement dédiée à cet effet, est prêt à décoller, l'unité de traitement 37 met en oeuvre le procédé de pilotage des tuyères secondaires 33A et 33B et déclenche automatiquement une augmentation de la puissance de compression de la station distante. Cette dernière devient suffisante pour que le dispositif de propulsion 30 se cabre et émerge totalement, jusqu'à atteindre un tangage, par exemple, de manière non limitative, de l'ordre de 10° à 15° par rapport à l'horizon. A ce stade, la phase de décollage assistée est terminée et le procédé de pilotage des tuyères secondaires recouvre son fonctionnement nominal. L'assiette du dispositif de propulsion 30 recouvre ainsi rapidement, c'est-à-dire en quelques secondes, une certaine à parfaite horizontalité. L'invention prévoit qu'à cette étape, une interface de sortie puisse émettre, par exemple, un son long et/ou un premier signal lumineux caractéristique. Une telle restitution sonore et/ou visuelle, voire vibratoire, peut être provoquée par l'unité de traitement 37 mettant en oeuvre le procédé de pilotage des tuyères secondaires. Un tel signal prévient le passager U1 qu'il dispose à présent de la plénitude des commandes de pilotage.

En variante et/ou en complément, une telle assistance automatique peut prévoir que le procédé de pilotage des tuyères provoque la délivrance d'un deuxième signal sonore, visuel ou vibratoire distinct du précédent, par exemple un son discontinu et/ou un signal lumineux caractéristique, alertant ledit passager-pilote U1 d'un non-respect d'une procédure de décollage sûre et maîtrisée. Une telle situation peut découler d'une sollicitation excessive et prématurée de la commande des gaz, via l'interface 38B par exemple, ou d'une tentative d'un ou plusieurs changements de trajectoires désirés trop marqués et/ou intempestifs, via l'interface 36 par exemple, durant la phase de décollage assistée. Ce deuxième signal prévient ainsi ledit utilisateur imprudent U1 qu'il ne pourra être en possession des commandes que lorsqu'il aura réduit sa demande de puissance de compression de fluide alimentant le groupe de poussée du dispositif de propulsion 30 ou sa sollicitation du guidon 36, en deçà d'un ou plusieurs seuils prédéterminés. Dans l'attente, le dispositif de propulsion, sous l'action de l'unité de traitement 37 poursuit un déplacement à faible vitesse et à une altitude et assiette par défaut déterminées et sures.

Concernant l'amerrissage, l'invention prévoit également que le procédé de pilotage des tuyères secondaires puisse assister automatiquement l'utilisateur U1 lors d'une demande d'amerrissage. Celle-ci peut être détectée par l'unité de traitement, par exemple, à la suite l'un lâcher durant une durée déterminée, situation généralement connue sous le terme de « détection de l'homme mort », de la commande des gaz, via l'interface 38B par exemple. Dans ce cas, afin que le dispositif de propulsion 30 ne vienne sans contrôle heurter éventuellement violemment la surface du fluide survolé, l'unité de traitement 37, via la mise en oeuvre d'un procédé de pilotage des tuyères secondaires selon l'invention, transmet une commande de réduction de la puissance de compression du fluide alimentant le groupe de poussée à la station de compression distante, et pilote les tuyères secondaires 33A et 33B pour, tout d'abord, recouvrer une altitude et une vitesse de déplacement correspondant à celles atteintes à la fin de la phase de décollage assistée, puis provoquer un amerrissage « en douceur ».

Les phases de décollage et/ou d'amerrissage assistées sont bien évidemment facultatives. Leurs mises en oeuvres peuvent découler d'un paramétrage du fonctionnement du procédé de pilotage des tuyères secondaires conforme à l'invention.

L'exemple de réalisation décrit en lien avec la figure 10 d'un dispositif de propulsion 30 peut avantageusement permettre à un instructeur distant, par exemple positionné sur la station de compression 40 ou sur un quai ou encore sur une embarcation proche, de piloter l'évolution du dispositif de propulsion 30 en lieu et place de l'utilisateur U1. Pour cela, les moyens de communication 37C peuvent recevoir un message de commande prioritaire C40, interprétable par l'unité de traitement 37 du dispositif de propulsion 30. Un tel message de commande prioritaire C40 peut comporter et véhiculer des consignes de pilotage similaires aux consignes C36 et C38A évoquées précédemment. Lesdites consignes véhiculées par ledit message C40 seront, dès réception dudit message C40, prises en considération par le procédé de pilotage des tuyères secondaires tel que décrit précédemment en lieu et place de celles produites via les interfaces 36 et 38A. Ainsi, un instructeur peut intervenir sur demande et de manière inopinée durant l'évolution d'un passager U1 débutant.

Par ailleurs, l'unité de traitement 37 peut comporter ou coopérer avec une ou plusieurs sources d'alimentation électriques 37PS, chargées d'alimenter en électricité les éléments actifs, l'unité de traitement elle-même et/ou capteurs ou actionneurs.

Enfin, l'invention prévoit que l'unité de traitement 37 puisse enregistrer un historique des consignes et/ou commandes de pilotage produites, voire encore des données de localisation éventuellement délivrées par le capteur 39, à des fins de monitoring ou de contrôle d'utilisation d'un dispositif de propulsion 30 conforme à l'invention. Un tel historique peut être sauvegardé dans la mémoire de données 37DM et être accessible en lecture depuis un objet électronique communicant, par exemple un ordinateur personnel, un téléphone mobile intelligent ou une tablette interactive pour consultation. Une telle communication peut en outre permettre de modifier le programme P inscrit dans la mémoire de programmes 37PM et/ou certains paramètres de configuration sauvegardés dans ladite mémoire de données 37DM, afin de modifier, sur demande, le comportement du dispositif de propulsion 30 et l'assistance automatique délivrée par ce dernier. Il est ainsi possible de modifier toutes ou partie des instructions et/ou données de paramètres exploitées par le produit programme P provoquant la mise en oeuvre du procédé de pilotage des tuyères secondaires par l'unité de traitement 37. Une telle communication peut être mise en oeuvre via les moyens de communication 37C évoqué précédemment ou via d'autres moyens et borniers de communication éventuels dédiés à cet effet.
L'invention a été décrite lors de sa mise en oeuvre à la surface de et/ou dans l'eau. Elle peut également être mise en oeuvre à la surface de n'importe quel fluide adapté et plus particulièrement dans les airs.

D'autres modifications peuvent être envisagées sans sortir du cadre de la présente invention défini par les revendications ci-annexées.

## Revendications

1. Dispositif de propulsion (30) comportant :
- une plateforme (31) agencée pour qu'un passager (U1, U2) puisse y prendre place,
- un groupe de poussée,
- des moyens (34) pour collecter (34C) et distribuer (34D) un fluide pressurisé audit groupe de poussée, lesdits moyens (34, 34C, 34D) étant alimentés en fluide pressurisé par un conduit d'alimentation (2), et coopérant avec la plateforme (31) selon une liaison encastrement,
- le groupe de poussée comportant deux tuyères secondaires (33A, 33B) coopérant, selon une liaison fluidique, avec lesdits moyens (34) pour collecter (34C) et distribuer (34D) un fluide pressurisé, pour être alimentées en fluide pressurisé, lesdites tuyères secondaires étant montées mobiles, chacune selon un axe transversal (AT) dudit dispositif de propulsion (30), ledit axe étant normal à un premier plan médian (PM) du dispositif de propulsion (30), ledit premier plan médian (PM) séparant une moitié bâbord d'une moitié tribord dudit dispositif de propulsion (30), pour délivrer ledit fluide pressurisé selon des directions de fluides respectives (DE33A, DE33B) inscrites dans des deuxièmes plans médians (PMA, PMB), distincts et parallèles audit premier plan médian (PM) du dispositif de propulsion (30) ;
- les tuyères secondaires (33A, 33B) étant positionnées au-dessous du centre de gravité et sensiblement à la proue (31P) dudit dispositif de propulsion (30) ;
- un actionneur (35A, 35B) associé à chaque tuyère secondaire (33A, 33B) provoquant une rotation (R), suivant un axe transversal (AT) du dispositif de propulsion (30), de la direction d'expulsion de fluide (DE33A, DE33B) de la tuyère secondaire concernée (33A, 33B) dans l'un desdits deuxièmes plans médians (PMA, PMB)
le dispositif de propulsion (30) étant **caractérisé en ce que** les actionneurs (35A, 35B), respectivement associés aux tuyères secondaires (33A, 33B), sont pilotés par commandes électriques (CdA, CdB), ledit dispositif de propulsion (30) comportant en outre une unité de traitement (37) conçue pour élaborer lesdites commandes électriques à partir d'une consigne de pilotage (C36, C38A) et/ou d'un référentiel déterminé par un ou plusieurs paramètres de configuration.

2. Dispositif de propulsion (30) selon la revendication 1, pour lequel le groupe de poussée comprend une tuyère principale (32) expulsant un fluide depuis une sortie de fluide selon une direction donnée (DE32), ladite tuyère principale (32) étant orientée sensiblement de la proue (31P) vers la poupe (31S) du dispositif de propulsion (30) de sorte que ladite direction d'expulsion de fluide (DE32) s'inscrive dans un plan médian (PM) du dispositif de propulsion (30), ledit plan médian (PM) séparant une moitié bâbord d'une moitié tribord dudit dispositif de propulsion (30), ladite tuyère principale (32) du groupe de poussée étant positionnée au-dessous du centre de gravité et sensiblement à la poupe (31S) du dispositif de propulsion (30).

3. Dispositif de propulsion (30) selon l'une quelconque des revendications précédentes, pour lequel les moyens pour collecter et distribuer (34, 34, 34C) un fluide pressurisé coopèrent avec le conduit d'alimentation (2) en fluide selon une liaison pivot au niveau de la partie proximale (2a) dudit conduit.

4. Dispositif (30) selon l'une quelconque des revendications précédentes, pour lequel la plateforme (31) comporte une armature rigide (31E, 31F), des éléments de flottabilité (31B), un carénage (31H), une assise (31T) sur laquelle le passager (U1, U2) prend place.

5. Dispositif de propulsion (30) selon la revendication précédente, pour lequel les éléments de flottabilité (31B) sont agencés pour maintenir partiellement la proue (31P) émergée lorsque que le dispositif de propulsion (30) est positionné à la surface d'un fluide et que le passager occupe une position assise sur ladite assise (31T), ledit passager (U1, U2) étant de corpulence moyenne.

6. Dispositif de propulsion (30) selon l'une quelconque des revendications précédentes, comportant une interface homme-machine (36, 38A, 38B) conçue pour traduire une gestuelle d'un utilisateur (U1) en :
- une consigne (C36) en changement de direction sous la forme d'une position angulaire au regard de l'assiette du plan longitudinal (PL) du dispositif de propulsion (30) autour d'un axe longitudinal (AL) dudit dispositif de propulsion ; et/ou
- une consigne (C38A) en changement d'altitude sous la forme d'une position angulaire au regard de l'assiette du plan longitudinal (PL) du dispositif de propulsion (30) autour d'un axe transversal (AT) dudit dispositif de propulsion (30).

7. Dispositif de propulsion (30) selon la revendication précédente, pour lequel le référentiel traduit une assiette (PL) et une altitude de croisière de référence d'un plan longitudinal (PL) du dispositif de propulsion (30), ce dernier comportant :
- des premier et deuxième capteurs (39A, 39B) pour mesurer les positions angulaires respectives (MA, MB) des tuyères secondaires (33A, 33B) au regard d'une position angulaire de référence ;
- un troisième capteur (39) délivrant une mesure du roulis (C39r) et/ou une mesure du tangage (C39p) subis par ledit plan longitudinal (PL) respectivement autour d'un axe longitudinal (AL) et d'un axe transversal (AT) dudit dispositif de propulsion (30).

8. Dispositif de propulsion (30) selon l'une quelconque des revendications 2 à 7, lorsque le groupe de poussée comporte une tuyère principale (32), pour lequel au moins une partie des moyens pour collecter et distribuer (34) ainsi que la tuyère principale (32) du groupe de poussée comportent une section oblongue.

9. Dispositif de propulsion (30) selon l'une quelconque des revendications précédentes, comportant un capteur agencé pour mesurer la pression courante du fluide pressurisé circulant dans les moyens pour délivrer (34D) ledit fluide pressurisé au groupe de poussée, ledit capteur délivrant ladite pression mesurée à l'unité de traitement (37), cette dernière étant agencée pour élaborer lesdites commandes électriques des actionneurs (35A, 35B), respectivement associés aux tuyères secondaires (33A, 33B) selon la pression courante du fluide pressurisé mesurée.

10. Dispositif de propulsion (30) selon l'une quelconque des revendications précédentes, pour lequel les première (33A) et deuxième (33B) desdites tuyères secondaires (33A, 33B) sont respectivement positionnées à bâbord et à tribord dudit dispositif de propulsion (30).

11. Système de propulsion **caractérisé en ce qu'**il comporte un dispositif de propulsion (30) selon l'une quelconque des revendications 1 à 10 coopérant avec une station de compression distante (40), ladite station (40) alimentant en fluide pressurisé ledit dispositif de propulsion (30) via le conduit d'alimentation (2).

12. Système selon la revendication précédente, pour lequel la station de compression distante (40) consiste en un véhicule nautique à moteur comportant une coque, des moyens de propulsion comprimant par turbinage un fluide ingéré depuis une entrée et expulsant ledit fluide ainsi mis sous pression depuis une sortie de fluide à l'arrière dudit véhicule.

13. Procédé de pilotage de tuyères secondaires (33A, 33B) d'un dispositif de propulsion (30) conforme à la revendication 7, ledit procédé étant mis en oeuvre par l'unité de traitement (37) dudit dispositif de propulsion (30), ledit procédé de pilotage comportant :
- une étape (S11) pour produire une commande (Cr) pour entraîner un écart de positions relatives desdites tuyères secondaires (33A, 33B) à partir de la consigne (C36) en changement de direction et de la mesure du roulis délivrée par le troisième capteur (39) dudit dispositif de propulsion (30) ;
- une étape (S12) pour produire une commande (Cp) de modification d'une position moyenne desdites tuyères secondaires (33A, 33B) à partir de la consigne (C38A) en changement d'altitude et de la mesure du tangage délivrée par le troisième capteur (39) dudit dispositif de propulsion (30) ;
- une étape (S20) pour produire :
▪ une commande (CmA) de pilotage d'une première (33A) des deux tuyères secondaires (33A, 33B) à partir d'une somme de la commande (Cr) pour provoquer un écart de positions relatives des tuyères secondaires (33A, 33B) et de la commande (Cp) de modification d'une position moyenne des tuyères secondaires, préalablement produites (S11, S12) ;
▪ une commande (CmB) de pilotage d'une deuxième (33B) desdites tuyères secondaires (33A, 33B) en retranchant ladite commande (Cr) pour provoquer un écart de positions relatives des tuyères secondaires (33A, 33B) de ladite commande (Cp) de modification d'une position moyenne desdites tuyères secondaires (33A, 33B) ;
- une étape (S31) pour élaborer et délivrer une commande (CdA) interprétable par l'actionneur (35A) associé à la première (33A) desdites tuyères secondaires (33A, 33B) à partir de la mesure (MA) de la positon angulaire de ladite première tuyère secondaire (33A) et de ladite commande de pilotage (CmA) de ladite première tuyère secondaire (33A) produite précédemment (S20) ;
- une étape (S32) pour élaborer et délivrer une commande (CdB) interprétable par l'actionneur (35B) associé à la deuxième (33B) desdites tuyères secondaires (33A, 33B) à partir de la mesure (MB) de la positon angulaire de ladite deuxième tuyère secondaire (33B) et de ladite commande de pilotage (CmB) de ladite deuxième tuyère secondaire (33B) produite précédemment (S20) .

14. Procédé de pilotage selon la revendication précédente, pour lequel l'une des étapes (S11, S12, S31, S32) consiste à mettre en oeuvre un correcteur Proportionnel, Intégrateur, Dérivateur.

15. Procédé de pilotage selon la revendication précédente, lorsque le dispositif de propulsion (30) est conforme à la revendication 9, pour lequel le correcteur Proportionnel, Intégrateur, Dérivateur mis en oeuvre dans l'une des étapes (S11, S12, S31, S32) dudit procédé, est fonction de la mesure de la pression du fluide pressurisé circulant dans les moyens (34D) pour délivrer ledit fluide pressurisé au groupe de poussée du dispositif de propulsion (30).

## Patentansprüche

1. Antriebsvorrichtung (30), die Folgendes umfasst:
- eine Plattform (31), die so ausgelegt ist, dass ein Passagier (U1, U2) darauf Platz nehmen kann,
- eine Schubeinheit,
- Mittel (34) zum Sammeln (34C) und Verteilen (34D) eines unter Druck stehenden Fluids an die genannte Schubeinheit, wobei die genannten Mittel (34, 34C, 34D) durch eine Versorgungsleitung (2) mit unter Druck stehendem Fluid versorgt werden und mit der Plattform (31) in einer Einbettungsverbindung zusammenwirken,
- wobei die Schubeinheit zwei Sekundärdüsen (33A, 33B) umfasst, die gemäß einer Fluidverbindung mit den genannten Mitteln (34) zum Sammeln (34C) und Verteilen (34D) eines unter Druck stehenden Fluids zusammenwirken, um mit unter Druck stehendem Fluid versorgt zu werden, wobei die genannten Sekundärdüsen jeweils entlang einer Querachse (AT) der genannten Antriebsvorrichtung (30) beweglich montiert sind, wobei die genannte Achse lotrecht zu einer ersten Mittelebene (PM) der Antriebsvorrichtung (30) ist, wobei die genannte erste Mittelebene (PM) eine Backbordhälfte von einer Steuerbordhälfte der genannten Antriebsvorrichtung (30) trennt, um das genannte unter Druck stehende Fluid gemäß jeweiligen Fluidrichtungen (DE33A, DE33B) zu liefern, die in zweiten Mittelebenen (PMA, PMB) liegen, die voneinander getrennt sind und parallel zur genannten ersten Mittelebene (PM) der Antriebsvorrichtung (30) verlaufen;
- wobei die Sekundärdüsen (33A, 33B) unterhalb des Schwerpunkts und im Wesentlichen am Bug (31P) der genannten Antriebsvorrichtung (30) positioniert sind;
- einen mit jeder Sekundärdüse (33A, 33B) assoziierten Aktuator (35A, 35B), der entlang einer Querachse (AT) der Antriebsvorrichtung (30) eine Drehung (R) der Fluidausstoßrichtung (DE33A, DE33B) der betreffenden Sekundärdüse (33A, 33B) in einer der genannten zweiten Mittelebenen (PMA, PMB) bewirkt,
wobei die Antriebsvorrichtung (30) **dadurch gekennzeichnet ist, dass** die jeweils mit den Sekundärdüsen (33A, 33B) assoziierten Aktuatoren (35A, 35B) durch elektrische Befehle (CdA, CdB) gesteuert werden, wobei die genannte Antriebsvorrichtung (30) außerdem eine Verarbeitungseinheit (37) umfasst, ausgelegt zum Erzeugen der genannten elektrischen Befehle auf der Basis eines Steuerungssollwerts (C36, C38A) und/oder eines durch einen oder mehrere Konfigurationsparameter bestimmten Referenzsystems.

2. Antriebsvorrichtung (30) nach Anspruch 1, bei der die Schubeinheit eine Hauptdüse (32) umfasst, die ein Fluid von einem Fluidauslass in einer gegebenen Richtung (DE32) ausstößt, wobei die genannte Hauptdüse (32) im Wesentlichen vom Bug (31P) zum Heck (31S) der Antriebsvorrichtung (30) orientiert ist, so dass die genannte Fluidausstoßrichtung (DE32) in einer Mittelebene (PM) der Antriebsvorrichtung (30) liegt, wobei die genannte Mittelebene (PM) eine Backbordhälfte von einer Steuerbordhälfte der genannten Antriebsvorrichtung (30) trennt, wobei die genannte Hauptdüse (32) der Schubeinheit unterhalb des Schwerpunkts und im Wesentlichen am Heck (31S) der Antriebsvorrichtung (30) positioniert ist.

3. Antriebsvorrichtung (30) nach einem der vorherigen Ansprüche, bei der die Mittel zum Sammeln und Verteilen (34, 34, 34C) eines unter Druck stehenden Fluids mit der Fluidversorgungsleitung (2) gemäß einer Schwenkverbindung am proximalen Teil (2a) der genannten Leitung zusammenwirken.

4. Vorrichtung (30) nach einem der vorherigen Ansprüche, bei der die Plattform (31) einen starren Rahmen (31E, 31F), Auftriebselemente (31B), eine Verkleidung (31H), eine Sitzfläche (31T) umfasst, auf der der Passagier (U1, U2) Platz nimmt.

5. Antriebsvorrichtung (30) nach dem vorherigen Anspruch, bei der die Auftriebselemente (31B) zum Halten des Bugs (31P) teilweise über Wasser ausgelegt sind, wenn die Antriebsvorrichtung (30) auf der Oberfläche eines Fluids positioniert ist und der Passagier eine Sitzposition auf der genannten Sitzfläche (31T) einnimmt, wobei der genannte Passagier (U1, U2) von mittlerem Körperbau ist.

6. Antriebsvorrichtung (30) nach einem der vorherigen Ansprüche mit einer Mensch-Maschine-Schnittstelle (36, 38A, 38B), ausgelegt zum Übersetzen einer Gestik eines Benutzers (U1) in:
- einen Richtungsänderungssollwert (C36) in Form einer Winkelposition in Bezug auf die Lage der Längsebene (PL) der Antriebsvorrichtung (30) um eine Längsachse (AL) der genannten Antriebsvorrichtung; und/oder
- einen Höhenänderungssollwert (C38A) in Form einer Winkelposition in Bezug auf die Lage der Längsebene (PL) der Antriebsvorrichtung (30) um eine Querachse (AT) der genannten Antriebsvorrichtung (30).

7. Antriebsvorrichtung (30) nach dem vorherigen Anspruch, bei der das Referenzsystem eine Referenz-Lage (PL) und - Reiseflughöhe einer Längsebene (PL) der Antriebsvorrichtung (30) übersetzt, wobei Letztere Folgendes umfasst:
- einen ersten und einen zweiten Sensor (39A, 39B) zum Messen der jeweiligen Winkelpositionen (MA, MB) der Sekundärdüsen (33A, 33B) in Bezug auf eine Referenz-Winkelposition;
- einen dritten Sensor (39), der einen Messwert der Rollbewegung (C39r) und/oder einen Messwert der Nickbewegung (C39p) liefert, die die genannte Längsebene (PL) jeweils um eine Längsachse (AL) und eine Querachse (AT) der genannten Antriebsvorrichtung (30) erfährt.

8. Antriebsvorrichtung (30) nach einem der Ansprüche 2 bis 7, wenn die Schubeinheit eine Hauptdüse (32) umfasst, bei der zumindest ein Teil der Mittel zum Sammeln und Verteilen (34) sowie die Hauptdüse (32) der Schubeinheit einen länglichen Querschnitt aufweisen.

9. Antriebsvorrichtung (30) nach einem der vorherigen Ansprüche, die einen Sensor umfasst, der zum Messen des aktuellen Drucks des unter Druck stehenden Fluids ausgelegt ist, das in den Mitteln zum Liefern (34D) des genannten unter Druck stehenden Fluids an die Schubeinheit zirkuliert, wobei der genannte Sensor den genannten Druckmesswert an die Verarbeitungseinheit (37) liefert, wobei Letztere zum Erzeugen der genannten elektrischen Befehle der jeweils mit den Sekundärdüsen (33A, 33B) assoziierten Aktuatoren (35A, 35B) gemäß dem aktuellen Druckmesswert des unter Druck stehenden Fluids ausgelegt ist.

10. Antriebsvorrichtung (30) nach einem der vorherigen Ansprüche, wobei die erste (33A) und zweite (33B) der genannten Sekundärdüsen (33A, 33B) jeweils an Backbord und an Steuerbord der genannten Antriebsvorrichtung (30) positioniert sind.

11. Antriebssystem, **dadurch gekennzeichnet, dass** es eine Antriebsvorrichtung (30) nach einem der Ansprüche 1 bis 10 umfasst, die mit einer entfernten Kompressorstation (40) zusammenwirkt, wobei die genannte Station (40) die genannte Antriebsvorrichtung (30) über die Versorgungsleitung (2) mit unter Druck stehendem Fluid versorgt.

12. System nach dem vorherigen Anspruch, bei dem die entfernte Kompressorstation (40) aus einem motorgetriebenen Wasserfahrzeug mit einem Rumpf und Antriebsmitteln besteht, die ein von einem Einlass aufgenommenes Fluid durch Turbinieren komprimieren und das genannte so unter Druck gesetzte Fluid aus einem Fluidauslass hinten im genannten Fahrzeug ausstoßen.

13. Verfahren zum Steuern von Sekundärdüsen (33A, 33B) einer Antriebsvorrichtung (30) nach Anspruch 7, wobei das genannte Verfahren von der Verarbeitungseinheit (37) der genannten Antriebsvorrichtung (30) ausgeführt wird, wobei das genannte Steuerverfahren Folgendes beinhaltet:
- einen Schritt (S11) zum Produzieren eines Befehls (Cr) zum Bewirken einer Abweichung von relativen Positionen der genannten Sekundärdüsen (33A, 33B) auf der Basis des Richtungsänderungssollwerts (C36) und des vom dritten Sensor (39) der genannten Antriebsvorrichtung (30) gelieferten Rollmesswerts;
- einen Schritt (S12) zum Produzieren eines Befehls (Cp) zum Ändern einer mittleren Position der genannten Sekundärdüsen (33A, 33B) auf der Basis des Höhenänderungssollwerts (C38A) und des vom dritten Sensor (39) der genannten Antriebsvorrichtung (30) gelieferten Nickmesswerts;
- einen Schritt (S20) zum Produzieren:
▪ eines Befehls (CmA) zum Steuern einer ersten (33A) der beiden Sekundärdüsen (33A, 33B) auf der Basis einer Summe des Befehls (Cr) zum Bewirken einer Abweichung von relativen Positionen der Sekundärdüsen (33A, 33B) und des Befehls (Cp) zum Ändern einer mittleren Position der Sekundärdüsen, die zuvor produziert wurden (S11, S12);
▪ eines Befehls (CmB) zum Steuern einer zweiten (33B) der genannten Sekundärdüsen (33A, 33B) durch Subtrahieren des genannten Befehls (Cr) zum Bewirken einer Abweichung von relativen Positionen der Sekundärdüsen (33A, 33B) von dem genannten Befehl (Cp) zum Ändern einer mittleren Position der genannten Sekundärdüsen (33A, 33B);
- einen Schritt (S31) zum Erzeugen und Ausgeben eines Befehls (CdA), der von dem mit der ersten (33A) der genannten Sekundärdüsen (33A, 33B) assoziierten Aktuator (35A) interpretiert werden kann, auf der Basis des Messwerts (MA) der Winkelposition der genannten ersten Sekundärdüse (33A) und des zuvor produzierten (S20) Steuerbefehls (CmA) für die genannte erste Sekundärdüse (33A);
- einen Schritt (S32) zum Erzeugen und Ausgeben eines Befehls (CdB), der von dem mit der zweiten (33B) der genannten Sekundärdüsen (33A, 33B) assoziierten Aktuator (35B) interpretiert werden kann, auf der Basis des Messwerts (MB) der Winkelposition der genannten zweiten Sekundärdüse (33B) und des zuvor erzeugten (S20) Steuerbefehls (CmB) für die genannte zweite Sekundärdüse (33B).

14. Steuerverfahren nach dem vorherigen Anspruch, bei dem einer der Schritte (S11, S12, S31, S32) darin besteht, einen Proportional-Integral-Differenzial-Regler zu implementieren.

15. Steuerverfahren nach dem vorherigen Anspruch, wenn die Antriebsvorrichtung (30) Anspruch 9 entspricht, bei dem der in einem der Schritte (S11, S12, S31, S32) des genannten Verfahrens implementierte Proportional-Integral-Differenzial-Regler vom Messwert des Drucks des unter Druck stehenden Fluids, das in den Mitteln (34D) zum Liefern des genannten unter Druck stehenden Fluids an die Schubeinheit der Antriebsvorrichtung (30) zirkuliert, abhängig ist.

## Claims

1. Propulsion device (30) including:
- a platform (31) arranged in such a way that a passenger (U1, U2) can take a place there,
- a thrust unit,
- means (34) for collecting (34C) and distributing (34D) a pressurized fluid to said thrust unit, said means (34, 34C, 34D) being supplied with pressurized fluid by a supply pipe (2) and cooperating with the platform (31) in an embedded connection,
- the thrust unit including two secondary nozzles (33A, 33B) cooperating, in a fluid connection, with said means (34) for collecting (34C) and distributing (34D) a pressurized fluid, so as to be supplied with pressurized fluid, said secondary nozzles being mounted movably, each according to a transverse axis (AT) of said propulsion device (30), said axis being normal to a first median plane (PM) of the propulsion device (30), said first median plane (PM) separating a port half from a starboard half of said propulsion device (30), in order to deliver said pressurized fluid in respective fluid directions (DE33A, DE33B) lying in second median planes (PMA, PMB), which are separate and parallel to said first median plane (PM) of the propulsion device (30);
- the secondary nozzles (33A, 33B) being positioned below the centre of gravity and substantially at the nose (31P) of said propulsion device (30);
- an actuator (35A, 35B) associated with each secondary nozzle (33A, 33B) causing a rotation (R), following a transverse axis (AT) of the propulsion device (30), of the fluid expulsion direction (DE33A, DE33B) of the secondary nozzle in question (33A, 33B) in one of said second median planes (PMA, PMB),
the propulsion device (30) being **characterized in that** the actuators (35A, 35B), respectively associated with the secondary nozzles (33A, 33B), are controlled by electrical commands (CdA, CdB), said propulsion device (30) also including a processing unit (37) designed to generate said electrical commands based on a control setpoint (C36, C38A) and/or a reference system determined by one or more configuration parameters.

2. Propulsion device (30) according to claim 1, for which the thrust unit comprises a main nozzle (32) expelling a fluid from a fluid outlet in a given direction (DE32), said main nozzle (32) being oriented substantially from the nose (31P) to the tail (31S) of the propulsion device (30) in such a way that said fluid expulsion direction (DE32) lies in a median plane (PM) of the propulsion device (30), said median plane (PM) separating a port half from a starboard half of said propulsion device (30), said main nozzle (32) of the thrust unit being positioned below the centre of gravity and substantially at the tail (31S) of the propulsion device (30).

3. Propulsion device (30) according to any one of the preceding claims, for which the means for collecting and distributing (34, 34, 34C) a pressurized fluid cooperate with the fluid supply pipe (2) in a pivot connection at the level of the proximal part (2a) of said pipe.

4. Device (30) according to any one of the preceding claims, for which the platform (31) includes a rigid framework (31E, 31F), buoyancy elements (31B), a fairing (31H), a seat (31T) on which the passenger (U1, U2) takes a place.

5. Propulsion device (30) according to the preceding claim, for which the buoyancy elements (31B) are arranged in order to keep the nose (31P) partially surfaced when the propulsion device (30) is positioned on the surface of a fluid and when the passenger occupies a seated position on said seat (31T), said passenger (U1, U2) being of average build.

6. Propulsion device (30) according to any one of the preceding claims, including a human-machine interface (36, 38A, 38B) designed to translate a gestural sign of a user (U1) into:
- a change of direction setpoint (C36) in the form of an angular position with respect to the attitude of the longitudinal plane (PL) of the propulsion device (30) about a longitudinal axis (AL) of said propulsion device; and/or
- a change of altitude setpoint (C38A) in the form of an angular position with respect to the attitude of the longitudinal plane (PL) of the propulsion device (30) about a transverse axis (AT) of said propulsion device (30).

7. Propulsion device (30) according to the preceding claim, for which the reference system translates a reference attitude (PL) and cruising altitude of a longitudinal plane (PL) of the propulsion device (30), the latter including:
- first and second sensors (39A, 39B) for measuring the respective angular positions (MA, MB) of the secondary nozzles (33A, 33B) with respect to a reference angular position;
- a third sensor (39) delivering a measurement of the roll (C39r) and/or a measurement of the pitch (C39p) undergone by said longitudinal plane (PL) about a longitudinal axis (AL) and a transverse axis (AT) respectively of said propulsion device (30).

8. Propulsion device (30) according to any one of claims 2 to 7, when the thrust unit includes a main nozzle (32), for which at least part of the means for collecting and distributing (34) as well as the main nozzle (32) of the thrust unit have an oblong section.

9. Propulsion device (30) according to any one of the preceding claims, including a sensor arranged to measure the current pressure of the pressurized fluid circulating in the means for delivering (34D) said pressurized fluid to the thrust unit, said sensor delivering said measured pressure to the processing unit (37), the latter being arranged to generate said electrical commands of the actuators (35A, 35B), respectively associated with the secondary nozzles (33A, 33B), according to the measured current pressure of the pressurized fluid.

10. Propulsion device (30) according to any one of the preceding claims, for which the first (33A) and second (33B) of said secondary nozzles (33A, 33B) are positioned respectively to port and to starboard of said propulsion device (30).

11. Propulsion system **characterized in that** it includes a propulsion device (30) according to any one of claims 1 to 10 cooperating with a remote compression station (40), said station (40) supplying said propulsion device (30) with pressurized fluid via the supply pipe (2).

12. System according to the preceding claim, for which the remote compression station (40) consists of a motorized watercraft including a hull, propulsion means compressing, by turbining, a fluid drawn in from an inlet and expelling said fluid, pressurized in this way, from a fluid outlet at the rear of said craft.

13. Method for controlling secondary nozzles (33A, 33B) of a propulsion device (30) according to claim 7, said method being implemented by the processing unit (37) of said propulsion device (30), said control method including:
- a step (S11) for producing a command (Cr) to cause a deviation in relative positions of said secondary nozzles (33A, 33B) based on the change of direction setpoint (C36) and on the measurement of the roll delivered by the third sensor (39) of said propulsion device (30);
- a step (S12) for producing a command (Cp) to modify an average position of said secondary nozzles (33A, 33B) based on the change of altitude setpoint (C38A) and on the measurement of the pitch delivered by the third sensor (39) of said propulsion device (30);
- a step (S20) for producing:
▪ a command (CmA) to control a first (33A) of the two secondary nozzles (33A, 33B) based on a sum of the command (Cr) to cause a deviation in relative positions of the secondary nozzles (33A, 33B) and the command (Cp) to modify an average position of the secondary nozzles, produced previously (S11, S12);
▪ a command (CmB) to control a second (33B) of said secondary nozzles (33A, 33B) by subtracting said command (Cr) to cause a deviation in relative positions of the secondary nozzles (33A, 33B) from said command (Cp) to modify an average position of said secondary nozzles (33A, 33B);
- a step (S31) for generating and delivering a command (CdA) that can be interpreted by the actuator (35A) associated with the first (33A) of said secondary nozzles (33A, 33B) based on the measurement (MA) of the angular position of said first secondary nozzle (33A) and said command to control (CmA) said first secondary nozzle (33A) produced previously (S20);
- a step (S32) for generating and delivering a command (CdB) that can be interpreted by the actuator (35B) associated with the second (33B) of said secondary nozzles (33A, 33B) based on the measurement (MB) of the angular position of said second secondary nozzle (33B) and said command to control (CmB) said second secondary nozzle (33B) produced previously (S20).

14. Control method according to the preceding claim, for which one of the steps (S11, S12, S31, S32) consists of implementing a proportional-integral-derivative controller.

15. Control method according to the preceding claim, when the propulsion device (30) is according to claim 9, for which the proportional-integral-derivative controller implemented in one of the steps (S11, S12, S31, S32) of said method is a function of the measurement of the pressure of the pressurized fluid circulating in the means (34D) for delivering said pressurized fluid to the thrust unit of the propulsion device (30).
